(19) **Europäisches Patentamt**
**European Patent Office**
**Office européen des brevets**

(11) **EP 3 324 283 B1**

(12) **EUROPEAN PATENT SPECIFICATION**

(45) Date of publication and mention
of the grant of the patent:
**25.11.2020 Bulletin 2020/48**

(51) Int Cl.:
***G06F 3/14*** *(2006.01)* ***G09G 5/12*** *(2006.01)*

(21) Application number: **17198496.6**

(22) Date of filing: **26.10.2017**

(54) **CONTENT CONTROL APPARATUS, CONTENT CONTROL PROGRAM, AND CONTENT CONTROL METHOD**

INHALTSSTEUERUNGSVORRICHTUNG, ANZEIGESTEUERUNGSPROGRAMM UND ANZEIGESTEUERUNGSVERFAHREN

APPAREIL DE COMMANDE DE CONTENU, PROGRAMME DE COMMANDE DE CONTENU ET PROCÉDÉ DE COMMANDE DE CONTENU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.11.2016 JP 2016225852**

(43) Date of publication of application:
**23.05.2018 Bulletin 2018/21**

(73) Proprietor: **FUJITSU LIMITED**
**Kanagawa 211-8588 (JP)**

(72) Inventors:
• **MURAKAWA, Yoshihiko**
**Kawasaki-shi, Kanagawa 211-8588 (JP)**
• **OKABAYASHI, Keiju**
**Kawasaki-shi, Kanagawa 211-8588 (JP)**

• **ITAKURA, Kota**
**Kawasaki-shi, Kanagawa 211-8588 (JP)**

(74) Representative: **Haseltine Lake Kempner LLP**
**138 Cheapside**
**London EC2V 6BJ (GB)**

(56) References cited:
**WO-A1-99/39328 WO-A1-2016/035283**
**US-A1- 2013 205 237 US-A1- 2015 143 266**

• **Anonymous: "Wraparound", Digital Cow software , 18 April 2015 (2015-04-18), XP002777433, Retrieved from the Internet: URL:http://web.archive.org/web/20150418055 857/https://www.digicowsoftware.com/detail ?_ app=Wraparound [retrieved on 2018-01-17]**

**EP 3 324 283 B1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD

The embodiments discussed herein relate to a content control apparatus, a content control program, and a content control method.

BACKGROUND

Multiple displays may be connected in response to a request for displaying a large number of contents on a large screen. For example, one wall of a room may be covered with multiple displays appearing as a single display; this may achieve a large screen.

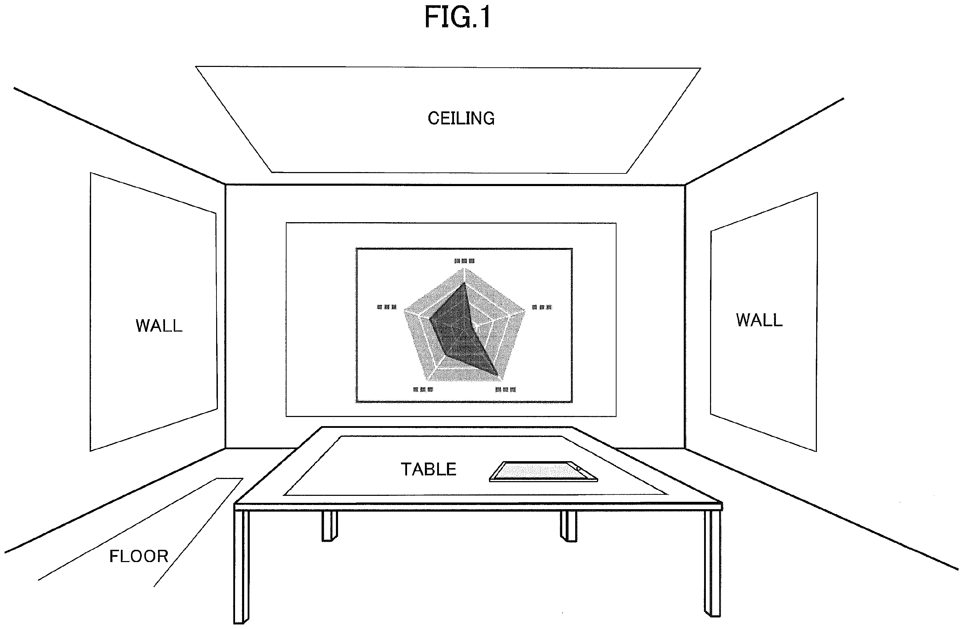

FIG. 1 is a diagram illustrating an example of an environment using multiple displays that are arranged on the left and right walls, front and rear walls, ceiling, floor, table (table top), and the like. In such an environment with multiple displays, it is assumed that discussion and brainstorming will be performed on various themes.

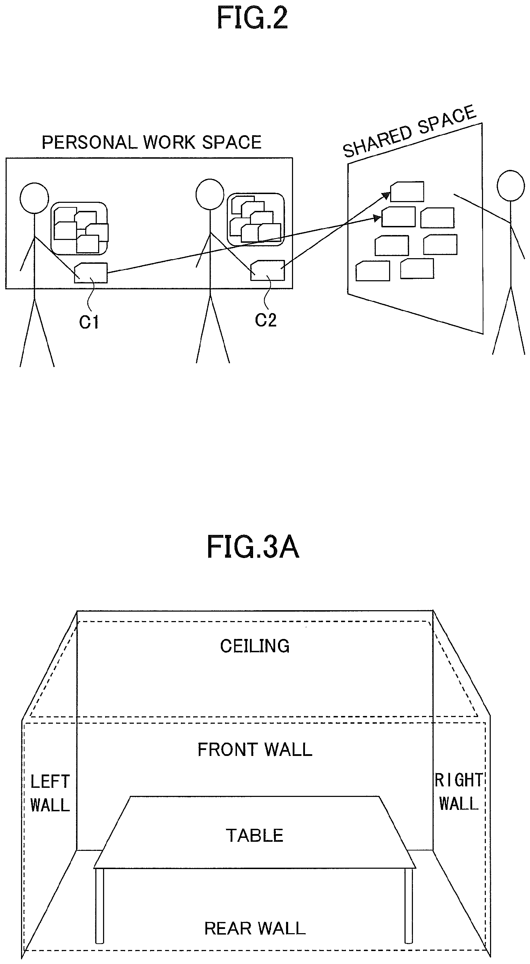

FIG. 2 is a diagram illustrating an example of a scene of brainstorming, where contents of digital sticky notes with written ideas are arranged in a personal workspace, and the contents C1 and C2 to be shared with other members are transferred (dispatched) by the respective users to a shared space. This makes it easier for an administrative user to handle the contents in the shared space.

When transferring a content, a user drags (slides) the content with a finger or a pen and releases it; as a result, the content starts being transferred at an initial speed according to a speed of being dragged in a dragged direction, and stops after being transferred by a predetermined distance with deceleration including a virtual dynamic friction coefficient.

The related art technology (e.g., Patent Documents 1 and 2) discloses a control technique for using a large number of displays; however, the disclosed technology merely involves a display for browsing, and does not consider an operation on the displayed contents.

RELATED ART DOCUMENTS

PATENT DOCUMENTS

Patent Document 1: Japanese Laid-open Patent Publication No. 2012-124759
Patent Document 2: Japanese Laid-open Patent Publication No. 2006-189637
Patent Document 3: WO 99/39328 relates to a multiscreen display system and method.
Patent Document 4: WO 2016/035283 relates to an information processing apparatus, control method, and program.

NON-PATENT DOCUMENT

Anonymous: "Wraparound" Digital Cow software, 18 April 2015. Retrieved from http://web.archive.org/web/20150418055857/https: //www.digicowsottware.corn/detail? app=Wraparound, relates to the Wraparound application.

As described above, when an operation to transfer the contents is performed in an environment in which multiple displays are connected, and display areas of the displays are arranged in a loop, the transferred content does not stop promptly, which will result not obtaining an operation result as desired. Note that the arrangement in the loop refers to a mode in which a display area of one display is connected via a display area of another display to the display area of the initial one display.

That is, a predetermined dynamic friction coefficient is virtually set for transferring the contents; however, when a user drags the content vigorously and releases the content, the transferred content does not stop at a desired destination and may still continue moving after having returned to the original position.

SUMMARY

Aspects of the invention are set out in the independent claims.

ADVANTAGEOUS EFFECT

According to embodiments, it is possible to stop a content that has undergone a transfer operation from continuing to be transferred even in a case where the display areas are arranged in a loop.

BRIEF DESCRIPTION OF THE DRAWINGS

FIG. 1 is a diagram illustrating an example of an environment in which multiple displays are used;
FIG. 2 is a diagram illustrating an example of a scene of brainstorming;
FIGS. 3A to 3C are diagrams (part 1) illustrating an example of connection of displays;
FIG. 4 is a diagram (part 2) illustrating an example of connection of displays;
FIG. 5 is a diagram illustrating a configuration example of a system according to an embodiment;
FIG. 6 is a diagram illustrating functional configuration examples of a server apparatus and a display control apparatus;
FIG. 7 is a diagram illustrating examples of data structures of various tables;
FIG. 8 is a diagram illustrating hardware configuration examples of a server apparatus and a display control apparatus;

FIG. 9 is a sequence diagram illustrating an overall process example according to an embodiment;

FIG. 10 is a diagram (part 1) illustrating an operation example in a first process example;

FIG. 11 is a diagram (part 2) illustrating the operation example in the first process example;

FIG. 12 is an example of data managed in the first process example;

FIG. 13 is a diagram illustrating a flowchart in the first process example;

FIG. 14 is a diagram (part 1) illustrating an operation example in a second process example;

FIG. 15 is a diagram (part 2) illustrating the operation example in the second process example;

FIG. 16 is an example of data managed in the second process example;

FIG. 17 is a diagram illustrating a flowchart in the second process example;

FIG. 18 is a diagram illustrating an operation example in a third process example;

FIG. 19 is a diagram illustrating a flowchart in the third process example;

FIGS. 20A to 20E are diagrams illustrating calculation formulas in the third process example;

FIG. 21 is a diagram illustrating an example of a case where determination is made by a total of transfer angles per unit time;

FIGS. 22A and 22B are diagrams illustrating an example of setting of a dynamic friction coefficient in the vicinity of a boundary in a fourth process example;

FIG. 23 is a diagram illustrating examples of normal distributions;

FIG. 24 is a diagram illustrating a flowchart in the fourth process example; and

FIGS. 25A to 25C are diagrams illustrating calculating formulas in the fourth process example.

## DESCRIPTION OF EMBODIMENTS

The following illustrates various embodiments with reference the accompanying drawings.

## DISPLAY CONNECTION

A direction of a content being displayed on a display (screen) is straightforward in the case of all displays (screens) being oriented in the same direction. However, when the displays are in various locations in a room as illustrated in FIG. 1, it is necessary to determine a display direction of a content in order to transfer the content between the displays. That is, a display method that is reasonable and easy to understand is required by controlling the connection method of the displays and the directions of the displayed content.

The connection of the displays and the direction of the displayed content may be controlled by determining upward and downward directions and leftward and rightward directions on each display in advance so as to display the content in the corresponding determined direction when transferring the content between the displays. However, the direction of the displayed content changes every time the content is transferred between displays; hence, a user and viewers need to be conscious of the direction with respect to each display.

In addition, in a case of a table, a table is not used from one direction only and may be used in all directions; from the top, bottom, left, and right. Accordingly, it will be complicated to control determining the directions in advance, specifically, in a case of a large number of displays.

In order to handle such complications, a model (sphere geometry) is introduced; this model includes projecting a display from the center of a circumscribed sphere to a spherical surface of the circumscribed sphere of a certain space (room), developing the projected display as a plane, and capturing connection relationships between the displays. That is, it is assumed that all displays are in contact with some adjacent display, and transferring a content between the displays is controlled based on the connection relationships.

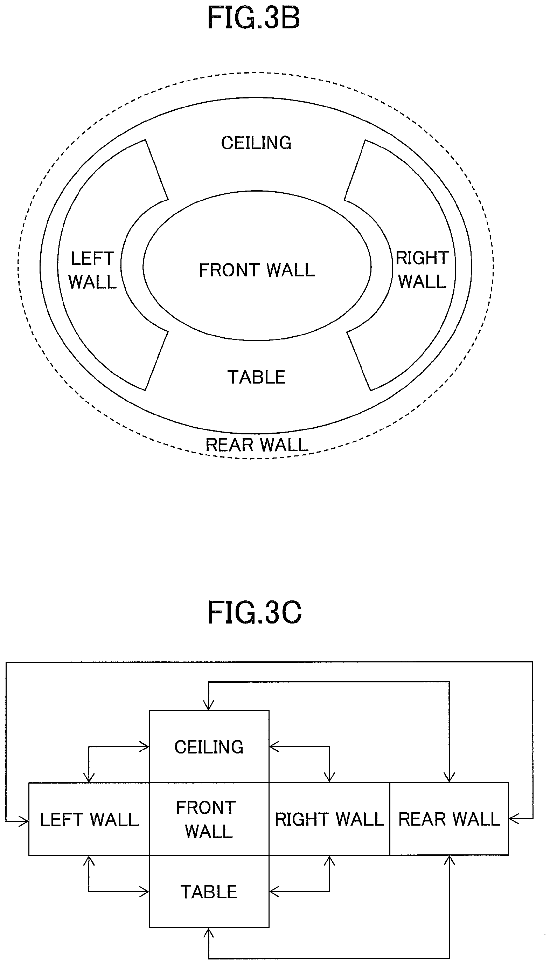

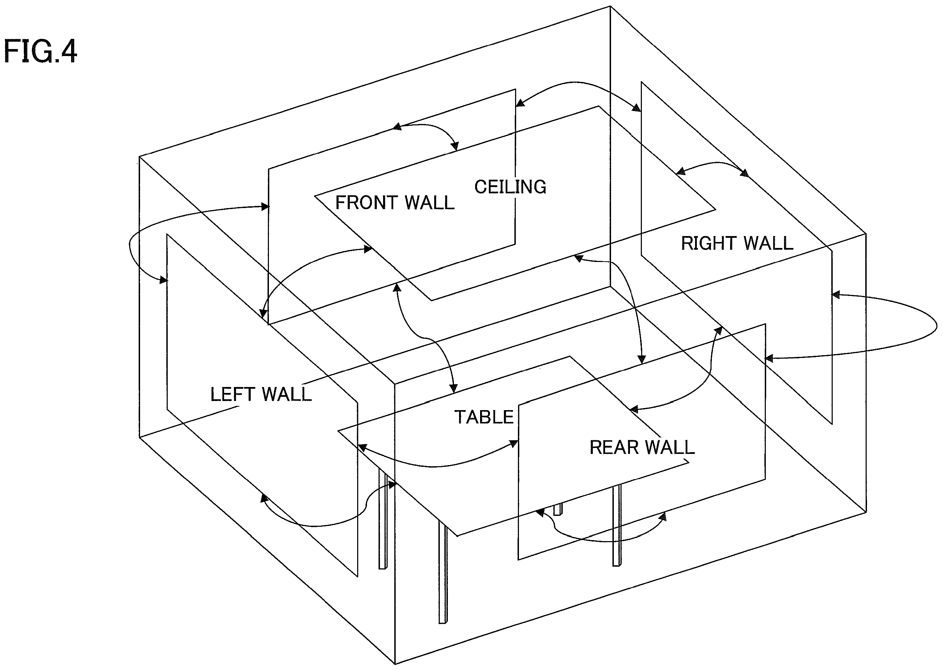

As illustrated in FIG. 3A, when displays are arranged on left and right walls, front and rear walls, the ceiling, and a table of the room, respectively, and the displays are developed as a plane, the displays are arranged as illustrated in FIG. 3B. Further, FIG. 3C illustrates connection relationships between the front wall, the left wall, the right wall, the ceiling, the table, and the rear wall with supplementary lines with arrows. In addition, FIG. 4 illustrates the connection relationship between respective displays stereoscopically.

## SYSTEM CONFIGURATION

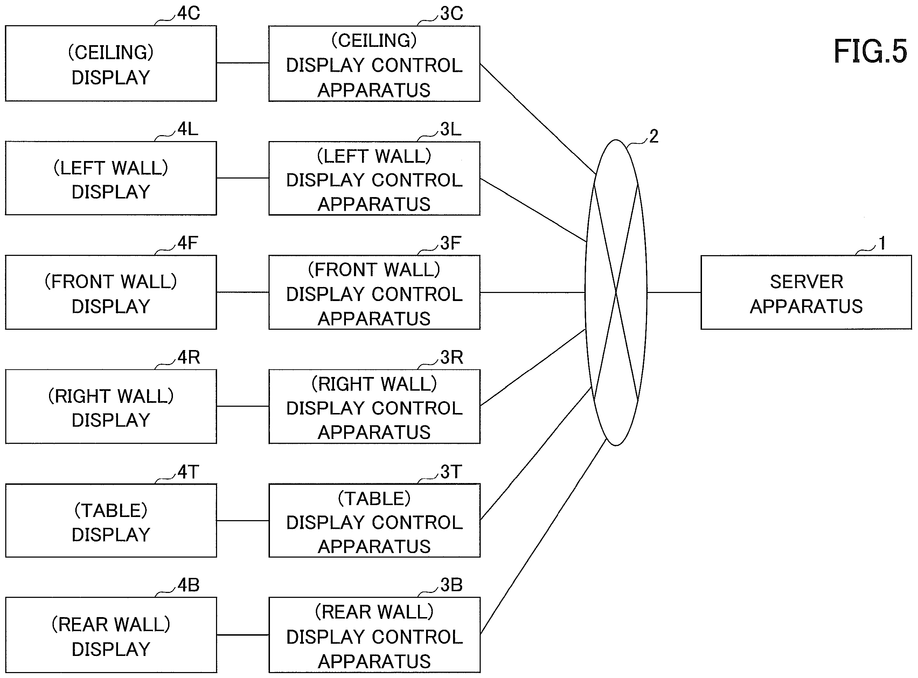

FIG. 5 is a diagram illustrating a configuration example of a system according to an embodiment, which is an example of an environment provided with six displays (display units) of front wall, left wall, right wall, ceiling, table, and rear wall as illustrated in FIG. 4. In FIG. 5, the system includes display control apparatuses 3 (3F, 3L, 3R, 3C, 3T, 3B) configured to control respective display units 4 (4F, 4L, 4R, 4C, 4T, 4B) and that are connected to a server apparatus 1 via a wired or wireless network 2. Examples of the display unit 4 include a projector, and a flat panel such as an LCD (Liquid Crystal Display). Further, a touch panel or the like is provided on the surface of the display unit 4 such that coordinate information of an operation by a user's finger or pen may be acquired. Note that one display control apparatus 3 is provided for each display unit 4; however, a smaller number of display control apparatuses 3 than of the display units 4 may control the display units 4. In addition, any of the display control apparatuses 3 may have the function of the server apparatus 1.

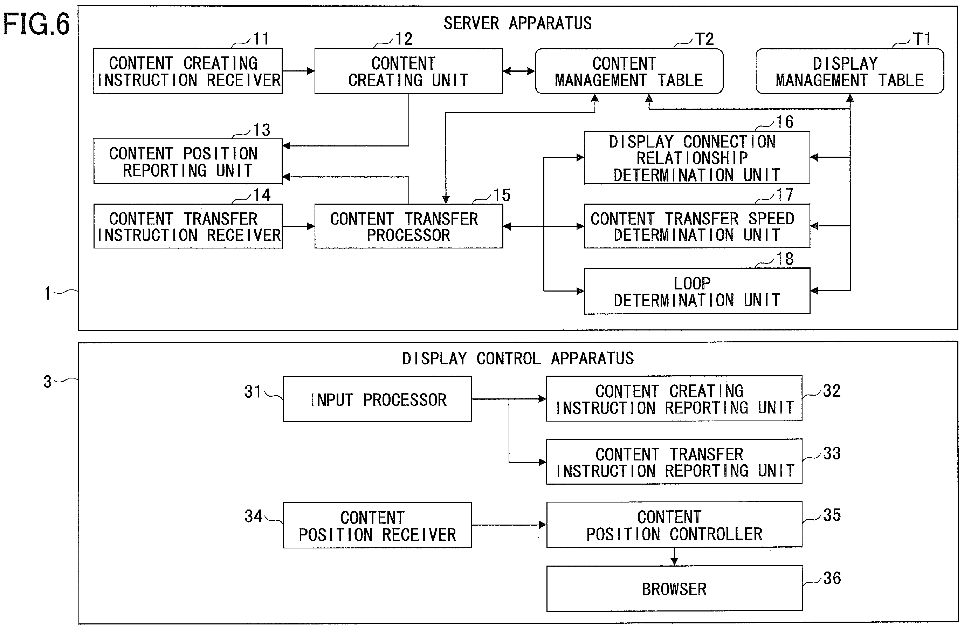

FIG. 6 is a diagram illustrating a functional configuration example of the server apparatus 1. In FIG. 6, the server apparatus 1 includes a content creating instruction receiver 11, a content creating unit 12, and a content position reporting unit 13. In addition, the server apparatus 1 includes a content transfer instruction receiver 14, a content transfer processor 15, a display connection relationship determination unit 16, a content transfer speed determination unit 17, and a loop determination unit 18. The server apparatus 1 includes a display management table T1 and a content management table T2 for referring/updating at the time of processing.

The content creating instruction receiver 11 has a function of receiving a content creating instruction from any one of the display control apparatuses 3. The content creating instruction is, for example, an instruction to create a digital sticky note, and includes an identifier of the display unit 4 on which handwriting input or the like has been performed, input coordinates (coordinates of a representative position where input is made), input contents (character string) and the like.

The content creating unit 12 has a function of creating content based on the content creating instruction received by the content creating instruction receiver 11. Information of the created content is stored in the content management table T2.

The content position reporting unit 13 has a function of reporting the identifier and display position of the content created by the content creation unit 12 to the display control apparatus 3 corresponding to the display unit 4 that displays the content. The content position reporting unit 13 also has a function of reporting a content and a display position to be transferred by the content transfer processor 15 to the display control apparatus 3 corresponding to the display unit 4 that displays the content.

The content transfer instruction receiver 14 has a function of receiving a content transfer instruction from any one of the display control apparatuses 3. The content transfer instruction is provided with the identifier of the content to be transferred, the transfer direction, the speed of the transferring operation, and the like.

The content transfer processor 15 has a function of transferring the content based on the content transfer instruction received by the content transfer instruction receiver 14. Information of the transferred content is stored in the content management table T2.

The display connection relationship determination unit 16 has a function of determining whether the content is transferred from one display unit 4 to another display unit 4 in the processing in the content transfer processor 15. The display connection relationship determination unit 16 refers to the display management table T1 and the content management table T2 at the time of processing.

The content transfer speed determination unit 17 has a function of determining the transfer speed of the content at the time of processing with respect to the content transfer processor 15. The content transfer speed determination unit 17 refers to the content management table T2 at the time of processing. It is assumed that the transfer speed imitates an object that slides while decelerating with a predetermined dynamic friction coefficient on the ground plane. That is, the transfer speed starts from the initial speed corresponding to the speed of the operation, and gradually decelerates with respect to the direction in which the operation for transferring the content was performed.

The loop determination unit 18 has a function of determining whether to stop the transferred content in order to prevent the content from continuing circling around due to the loop of the display areas according to whether the transferred content has attained a position to stop, with respect to the processing of the content transfer processor 15. The loop determination unit 18 refers to the display management table T1 and the content management table T2 at the time of processing. As will be described later, when maximizing the dynamic friction coefficient at the boundary or the like such that the content stops spontaneously at the boundary or the like, a function of the loop determination unit 18 is performed by the content transfer processor 15.

The display control apparatus 3 includes an input processor 31, a content creating instruction reporting unit 32, a content transfer instruction reporting unit 33, a content position receiver 34, a content position controller 35, and a browser 36.

The input processor 31 has a function of receiving an operation input by a user. The present embodiment involves an operation for creating a content and an operation for transferring the content; however, the operation input is not specifically limited to these examples. The operation for creating the content is performed by handwriting input to a desired position on the display unit 4, for the digital sticky note. The operation for transferring the content is performed by dragging (sliding operation) the content displayed on the display unit 4.

The content creating instruction reporting unit 32 has a function of reporting a content creating instruction to the server apparatus 1 when the input processor 31 receives an operation for creating the content. The information included in the content creating instruction is as described above.

The content transfer instruction reporting unit 33 has a function of transferring a content transfer instruction to the server apparatus 1 when the input processor 31 receives an operation for transferring the content. The information included in the content transfer instruction is as described above.

The content position receiver 34 has a function of receiving a content position reporting instruction from the server apparatus 1. The content position report includes an identifier of the content and a display position. The detail of the content may be obtained based on an identifier of the content.

The content position controller 35 has a function of controlling a display position of the content based on the identifier and the display position of the content received by the content position receiver 34.

The browser 36 has a function of displaying the content corresponding to the display position instructed by the content position controller 35.

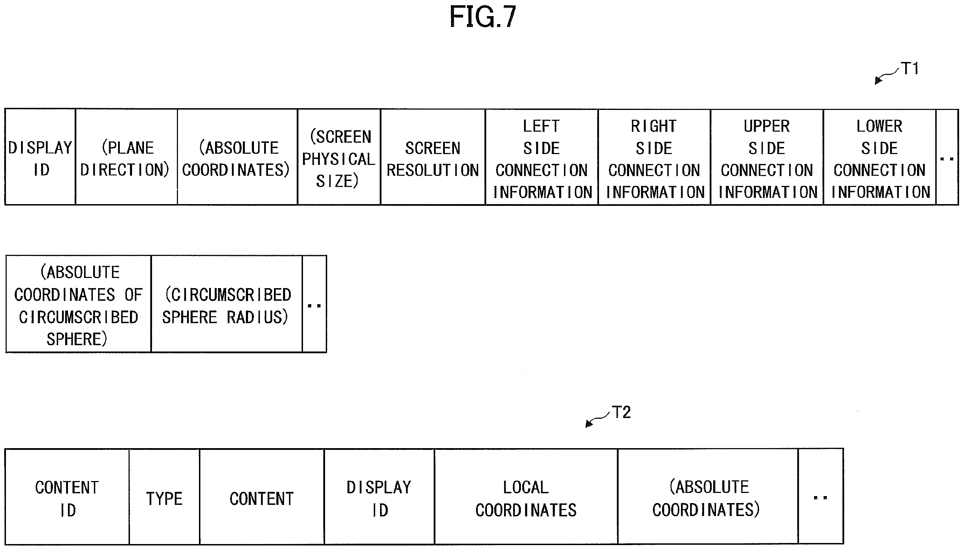

FIG. 7 is a diagram illustrating examples of data structures of various tables. In FIG. 7, the display management table T1 includes items such as "display ID", "(surface direction)", "(absolute coordinates)", "(screen physical size)", "screen resolution", "left side connection information", "right side connection information", "upper side connection information", and "lower connection information". The display management table T1 has information of "(circumscribed sphere absolute coordinate)" and "(circumscribed sphere radius)" separately from the information for each display. Note that "(surface direction)", "(absolute coordinates)", "(physical screen size)", "(absolute coordinates of circumscribed sphere)", and "(circumscribed sphere radius)" are used for converting the position on the display unit 4 mutually between local coordinates (two-dimensional coordinates on the screen) and absolute coordinates (three-dimensional coordinates). Hence, the above items may be unnecessary in a case of performing processing on local coordinates in the first process example and the second process example described later.

The "display ID" is information (identifier) for identifying a display unit 4. The "(surface direction)" represents, for example, three-dimensional rotation to the target display unit 4 with the Euler angle, roll, pitch, yaw etc. on the basis of the front display unit 4(on the front wall). The "(absolute coordinates)" is the absolute coordinates of the base point of the display unit 4 (e.g., the lower left corner of the screen acting as the origin of the local coordinates). The "(screen physical size)" is a physical length in vertical and horizontal directions of the screen of the display unit 4. The "screen resolution" is the number of vertical and horizontal pixels on the screen of the display unit 4.

The "left side connection information" is connection information on the screen of another display unit 4 connected to the left side of the display unit 4, including a display ID and a connection range (a range within which the side may be connected, the position of the connected counterpart etc.). The "right connection information", "upper connection information" and "lower connection information" are connection information on the right side, the upper side, and the lower side of the display unit 4, respectively.

The "(circumscribed sphere absolute coordinates)" is absolute coordinates of the center of a sphere (circumscribed sphere) circumscribing the space (room) where the display unit 4 is arranged. The "(circumscribed sphere radius)" is a radius of the circumscribed sphere.

The content management table T2 has items such as "content ID", "type", "detail", "display ID", "local coordinates", and "(absolute coordinates)". Hence, the "(absolute coordinates)" may be unnecessary in a case of performing processing on local coordinates in the first process example and the second process example described later.

The "content ID" is information (identifier) for identifying a content. T "type" is information indicating a type of content (e.g., a digital sticky note). The "detail" is a detail of content (a character string to be entered in the case of digital sticky notes). The "display ID" is a display ID of the display unit 4 on which the content is currently displayed. The "local coordinates" is local coordinates of the base point of the content. The "(absolute coordinates)" is absolute coordinates of the base point of the content.

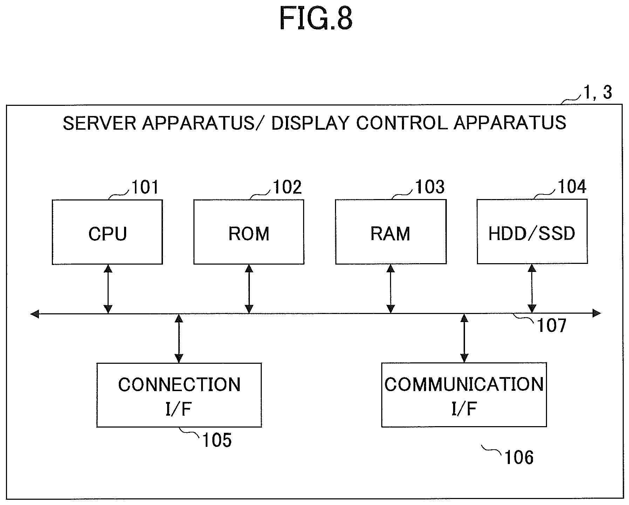

FIG. 8 is a diagram illustrating a hardware configuration example of the server apparatus 1 and the display control apparatus 3, each of which has a configuration of a general information processing apparatus (computer). In FIG. 8, the server apparatus 1 and the like include a CPU (Central Processing Unit) 101, a ROM (Read Only Memory) 102, a RAM (Random Access Memory) 103, and a HDD (Hard Disk Drive)/SSD (Solid State Drive) 104. Further, the server apparatus 1 and the like include a connection I/F (interface) 105 and a communication I/F 106.

The CPU 101 comprehensively controls operations of the server apparatus 1 and the like by executing programs stored in the ROM 102 or the HDD/SSD 104 or the like, using the RAM 103 as a work area. The connection I/F 105 is an interface with a device or an apparatus connected to the server apparatus 1 and the like. The communication I/F 106 is an interface for communicating with another information processing apparatus via a network.

The functions of the server apparatus 1 and the like described with reference to FIG. 6 are implemented by executing a predetermined program with respect to the CPU 101. The program may be acquired via a recording medium, may be acquired via a network, or may be embedded in a ROM.

OVERALL PROCESS EXAMPLE

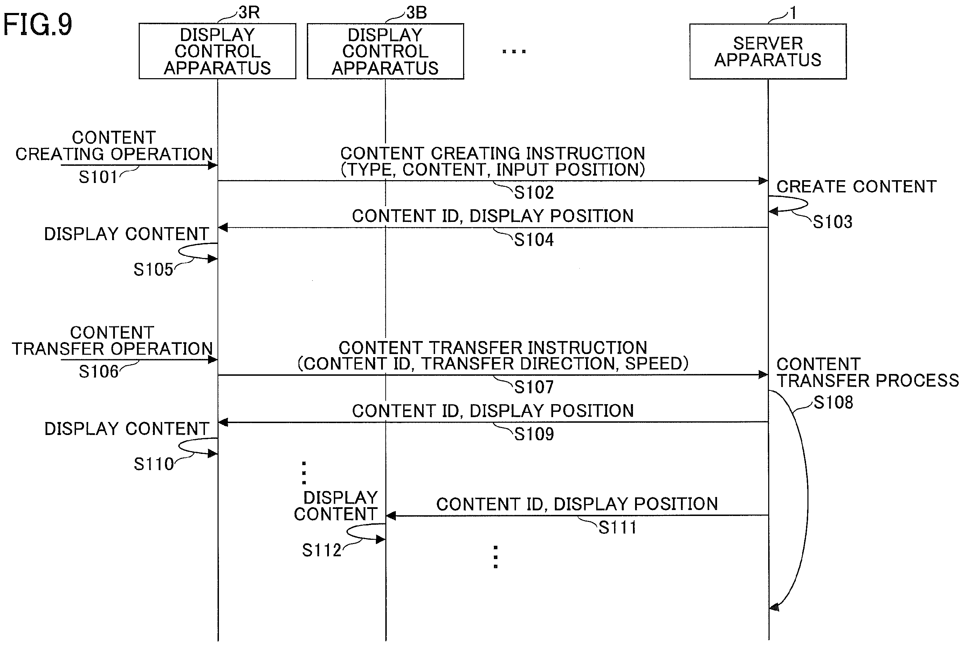

FIG. 9 is a sequence diagram illustrating a process example according to the embodiment. In FIG. 9, when a user intends to create a content such as a digital sticky note, the user performs a content creating operation on, for example, a display unit 4R (not illustrated) near the user, and this user's operation is performed by an input processor 31 of a corresponding display control apparatus 3R (step S101). In response to the input content creating operation, the content creating instruction reporting unit 32 of the display control apparatus 3R reports a content creating instruction accompanied by the content type, content (character string, etc.), input position, and the like to the server apparatus 1 (step S102).

When the content creating instruction receiver 11 of the server apparatus 1 receives the content creating instruction, the content creating unit 12 creates a content according to the content creating operation and registers information of the created content in the content management table T2 (step S103). For example, in a case of creating a digital sticky note, a new content ID is issued, the input character string is used as a content, local coordinates starting from the input position are set as a display position, and the ID of the display unit 4R is set as a display ID. Then, the content position reporting unit 13 reports the content ID and display position of the created content to the display control apparatus 3R corresponding to the display unit 4R to which the input operation has been performed (step S104).

When the content position receiver 34 of the display control apparatus 3R receives the report of the content ID and the display position, the content position controller 35 instructs the browser 36 to display the content, and the browser 36 displays the content on the corresponding display unit 4R (step S105). When the browser 36 does not hold the content display data, the browser 36 acquires content display data based on the content ID from the server apparatus 1.

When the user intends to transfer the display position of the content, the user performs a content transfer operation on the display unit 4R on which the content is displayed, and this operation is input by the input processor 31 of the corresponding display control apparatus 3R (step S106). For example, when the user intends to "throw" the content to a distant position, the user momentarily drags the content with the user's hand in a direction in which the content is desired to be thrown, and releases the user's hand. In response to the input content transfer operation, the content transfer instruction reporting unit 33 of the display control apparatus 3R reports the content transfer instruction accompanied by the content ID, the transfer direction, the dragging speed, and the like to the server apparatus 1 (step S107).

When the content transfer instruction is received by the content transfer instruction receiver 14 of the server apparatus 1, the content transfer processor 15 performs a content transfer process (step S108). This transfer process is performed by the content transfer speed determination unit 17, the display connection relationship determination unit 16, and the loop determination unit 18. That is, the content transfer speed determination unit 17 determines a transfer speed of the content in consideration of an initial speed of the content and a dynamic friction coefficient. The display connection relationship determination unit 16 determines whether the content is transferred across the displays. The loop determination unit 18 determines whether to stop the content according to whether the content has attained a predetermined position. Details of the process will be described later.

Then, the content transfer processor 15 reports the content ID and the display position of a transfer destination to the display control apparatus 3R via the content position reporting unit 13, with a predetermined time as a unit (step S109). When the content position receiver 34 of the display control apparatus 3R receives the report of the content ID and the display position, the content position controller 35 instructs the browser 36 to display the content. Then, the browser 36 displays the content (accompanied by erasing the original display) on the corresponding display unit 4R (step S110).

Since the content continues to be transferred while decelerating by the dynamic friction coefficient, reporting of the content ID and the display position of the transfer destination from the server apparatus 1 is repeated with a predetermined time as a unit, and the display control apparatus 3R performs display control. When the content enters the display area of, for example, an adjacent display unit 4B, the content ID and the display position of the transfer destination are reported to the corresponding display control apparatus 3B (step S111), and the display control apparatus 3B displays the content on the display unit 4B (step S112). These processes are repeated until the content transferred is stopped.

FIRST PROCESS EXAMPLE

In the first process example, a fixed boundary (boundary line) is set in either a vertical direction or a horizontal direction on any of the displays 4 in order to stop the content that has been transferred to the boundary. The content stopped at the boundary is released and becomes transferrable once the stop from the boundary is released, and after passing through the boundary, the released content is again stopped at the next pass.

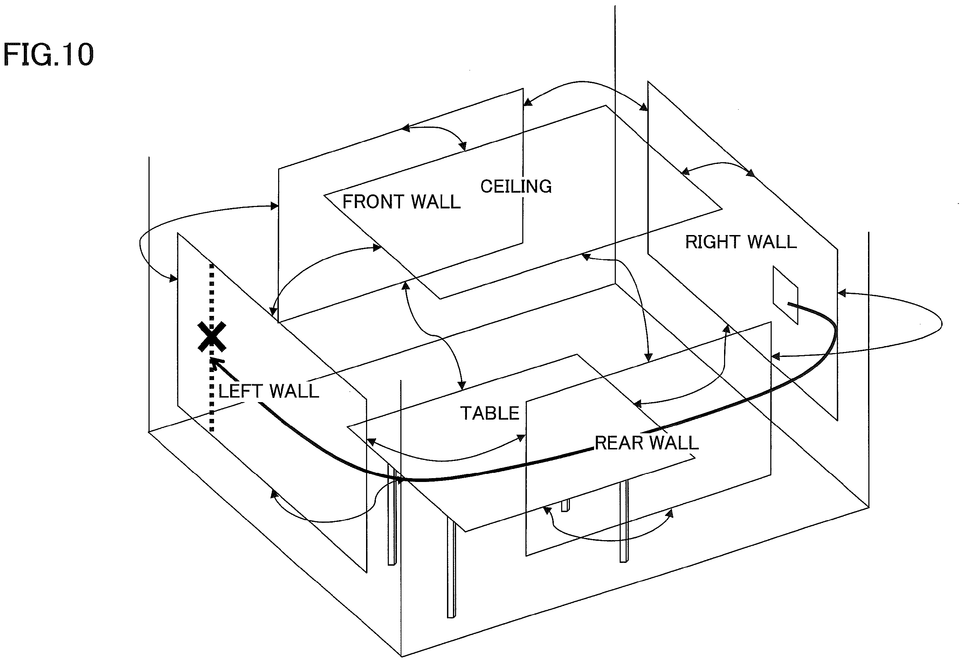

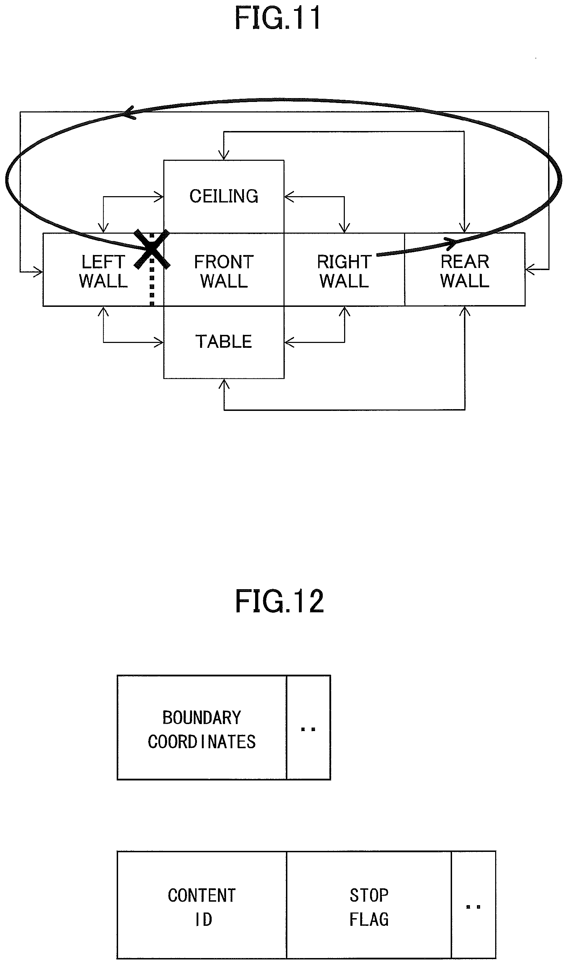

FIG. 10 is a diagram illustrating an operation example in the first process example, in which the display unit 4 is arranged on the front wall, the left wall, the right wall, the ceiling, the table, and the rear wall, similar to the case illustrated in FIG. 4. Further, in this example, a vertical boundary is provided in a part of the left wall as indicated by a broken line. In this state, for example, when an operation for vigorously transferring the content displayed on the right wall to the right direction is performed, the content enters the left wall via the rear wall as indicated by a thick line. Thereafter, when the content attains the boundary, the content is stopped as indicated by "x". As a result, even when the transfer operation is too strong without adjustment, it is possible to prevent the content from continuing circling around. FIG. 11 illustrates a similar operation as in FIG. 10 in a state where the displays are developed as a plane similar to FIG. 3C.

FIG. 12 illustrates an example of data managed by the first process example, which has data for setting boundary coordinates and a stop flag for each content. When an x axis of the local coordinates represents a horizontal direction and a y axis of the local coordinates represents a vertical direction, a y coordinate value of the local coordinates indicates the boundary coordinates for setting the boundary in the vertical direction, and an x coordinate value of the local coordinates indicates the boundary coordinates for setting the boundary in the horizontal direction. The stop flag signifies stopping without allowing passing through the boundary when ON, and permits passing through the boundary when OFF.

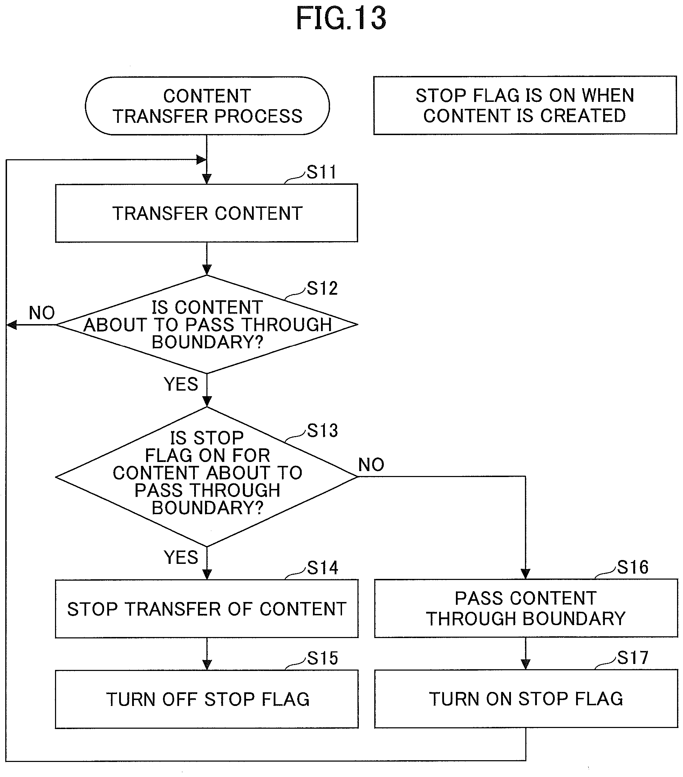

FIG. 13 is a diagram illustrating a flowchart in the first process example, which indicates a process corresponding to the content transfer process (step S108) in FIG. 9. In FIG. 13, when starting the process, the content transfer processor 15 obtains the display position of the content after a unit time on the display based on the transfer direction and the transfer speed determined by the content transfer speed determination unit 17, and transfers the content (step S11).

Subsequently, the content transfer processor 15 determines whether the content is about to pass through the boundary (step S12).

When the content transfer processor 15 determines that the content is not about to pass through the boundary (No in step S12), the content transfer processor 15 returns to the transfer of the content (step S11).

When the content transfer processor 15 determines that the content is about to pass through the boundary (Yes in step S12), the content transfer processor 15 determines whether the stop flag of the content is ON (step S13). Note that it is assumed that the stop flag is set to ON at the time of content creation.

When the content transfer processor 15 determines that the stop flag of the content is ON (Yes in step S13), the content transfer processor 15 stops the transfer of the content (step S14) and sets the stop flag of the content to OFF (step S15).

When the content transfer processor 15 determines that the stop flag of the content is OFF (No in step S13), the content transfer processor 15 passes the content through the boundary (step S16), sets the stop flag of the content to ON (step S17), and continues the transferring process.

SECOND PROCESS EXAMPLE

In the second process example, the boundary is not fixed; the boundary is instead dynamically set at the transfer start position for each content in order to stop the content that has again attained the boundary.

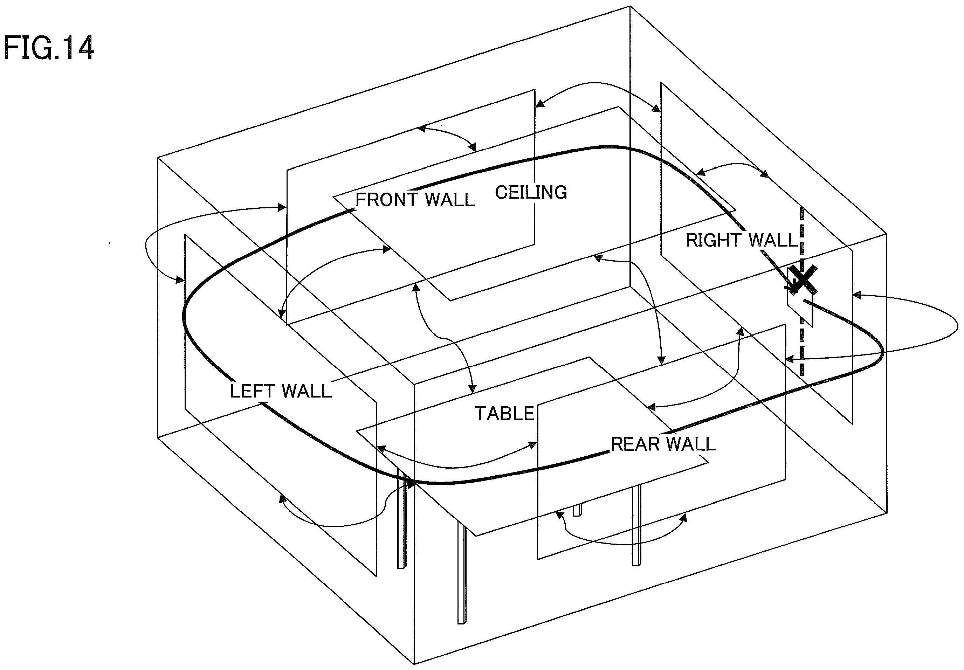

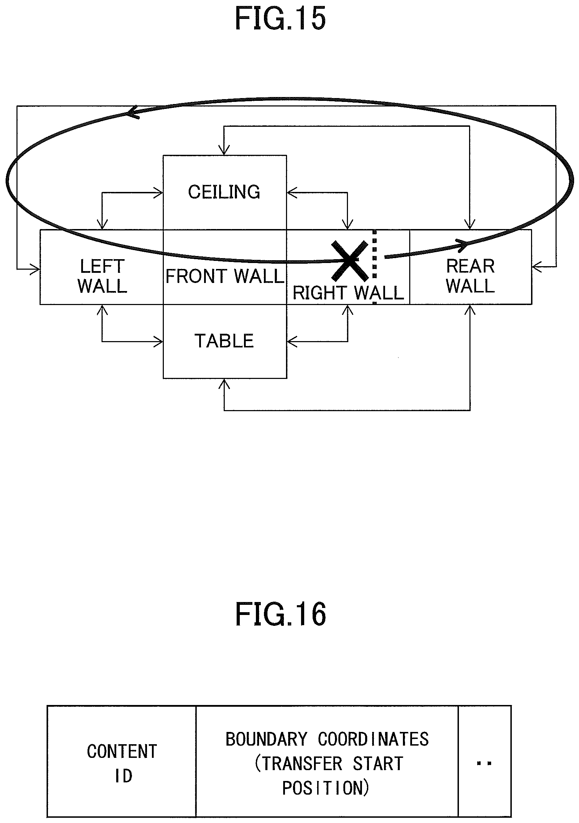

FIG. 14 is a diagram illustrating an operation example in the second process example, in which the display 10 is arranged on the front wall, the left wall, the right wall, the ceiling, the table, and the rear wall, similar to the case illustrated in FIG. 10. In this state, for example, when an operation for vigorously transferring the content displayed on the right wall to the right direction is performed, a boundary indicated by a broken line is initially set at the transfer start position. Then, the content is transferred and enters the right wall again sequentially via the rear wall, the left wall and the front wall as indicated by a thick line. Thereafter, when the content attains the boundary corresponding to the transfer start position, the content is stopped as indicated by "x". As a result, even when the transfer operation is too strong without adjustment, it is possible to prevent the content from continuing circling around. FIG. 15 illustrates a similar operation as in FIG. 14 in a state where the displays are developed as a plane similar to FIG. 11.

FIG. 16 illustrates an example of data managed by the second process example, and boundary coordinates corresponding to the transfer start position are held for each content.

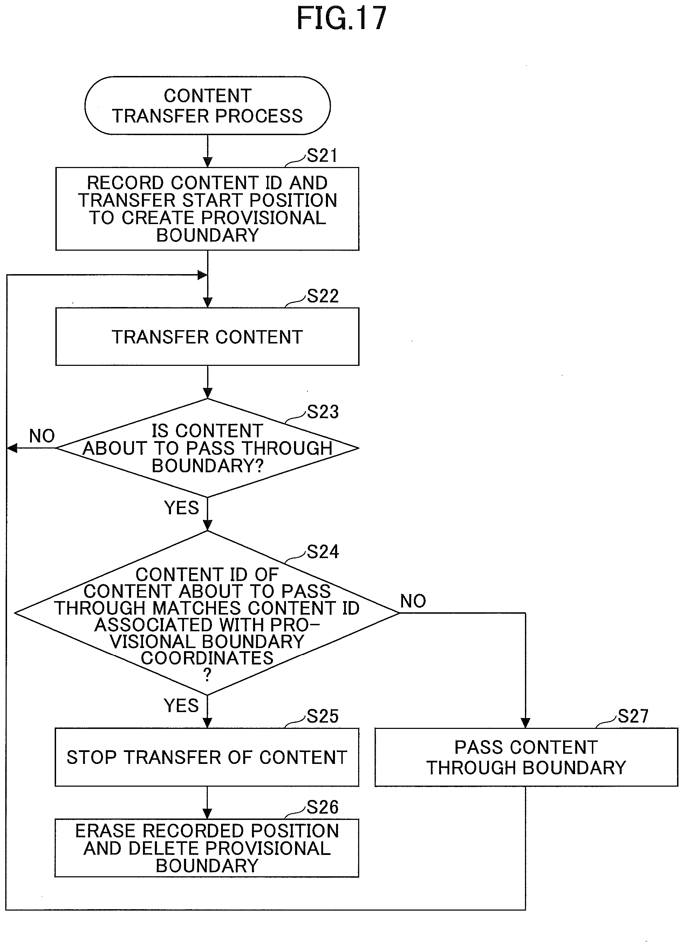

FIG. 17 is a diagram illustrating a flowchart in the second process example, which indicates a process corresponding to the content transfer process (step S108) in FIG. 9. In FIG. 17, when starting the process, the content transfer processor 15 records the content ID and the transfer start position in association with each other to create a provisional boundary (step S21).

Subsequently, the content transfer processor 15 obtains the display position of the content after a unit time on the display based on the transfer direction and the transfer speed determined by the content transfer speed determination unit 17, and transfers the content (step S22).

Subsequently, the content transfer processor 15 determines whether the content is about to pass through the boundary (step S23).

When the content transfer processor 15 determines that the content is not about to pass through the boundary (No in step S23), the content transfer processor 15 returns to the transfer of the content (step S22).

When the content transfer processor 15 determines that the content is about to pass through the boundary (Yes in step S23), the content transfer processor 15 determines whether the content ID of the content that is about to pass through the boundary matches the content ID associated with the boundary coordinates (step S24).

When the content transfer processor 15 determines that the two content IDs match (Yes in step S24), the content transfer processor 15 stops the transfer of the content (step S25), and then erases the recorded corresponding position and deletes the provisional boundary (Step S26).

When the content transfer processor 15 determines that the two content IDs do not match (No in step S24), the content transfer processor 15 passes the content through the boundary (step S27) and continues the transferring process.

THIRD PROCESS EXAMPLE

In the third processing example, in order to handle any direction of the transfer of the content, a straight line from the center of the circumscribed sphere of the space (room) in which the display unit 4 is arranged to the content is used to determine whether the content has attained the transfer start position of a corresponding one of the contents.

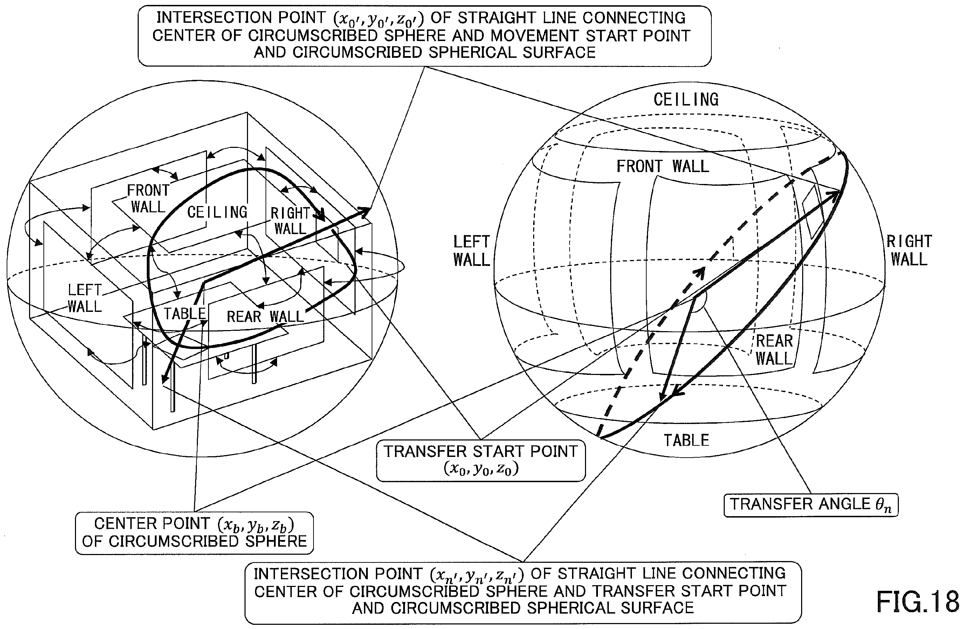

FIG. 18 is a diagram illustrating an operation example in the third process example, in which a left diagram indicates the arrangement of the displays in the room and the circumscribed sphere, and a right diagram indicates the outlines of the respective displays being projected on spherical surfaces of the circumscribed sphere. In this state, for example, when an operation for vigorously transferring the content displayed on the right wall to a diagonally lower right direction is performed, the content enters the right wall again via the rear wall, the table, and the front wall in a sequential order as indicated by a thick line. Thereafter, when the content attains the transfer start position, the angle formed between the straight line from the center of the circumscribed sphere to the transfer start position for each content and the straight line from the center of the circumscribed sphere to the position of the transferred content may be regarded to be of zero value and the transfer is stopped. As a result, even when the transfer operation is too strong without adjustment, it is possible to prevent the content from continuing circling around.

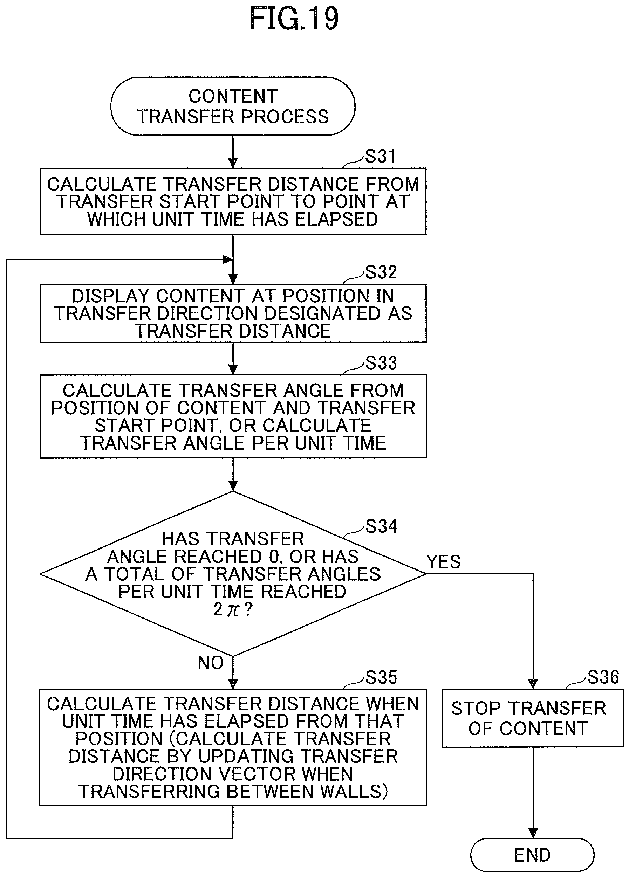

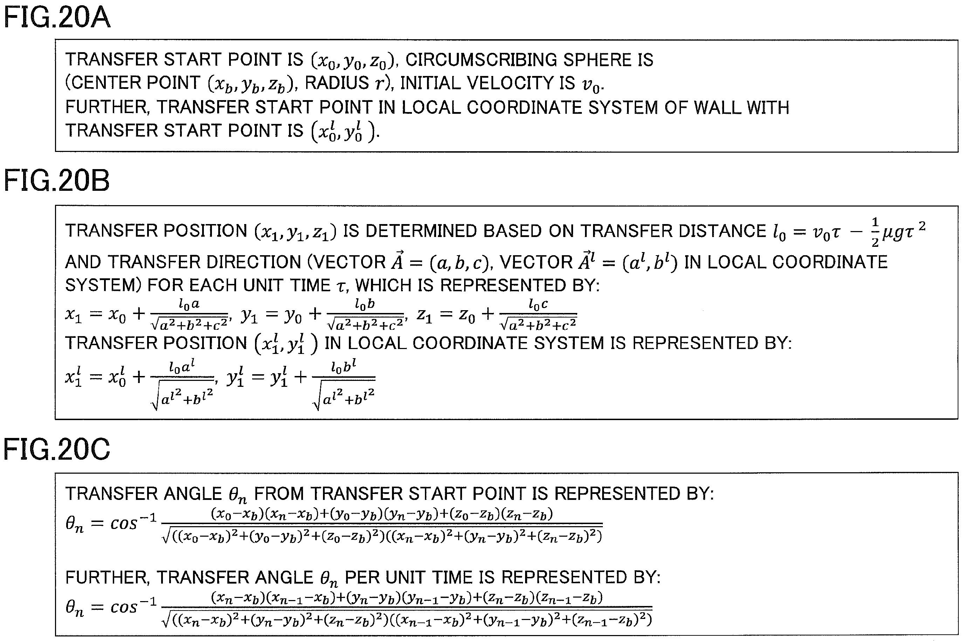

FIG. 19 is a diagram illustrating a flowchart in the third process example, which indicates a process corresponding to the content transfer process (step S108) in FIG. 9. In FIG. 19, when starting the processing, the content transfer processor 15 calculates a transfer distance between the transfer start point and a point at which a unit time has elapsed from the transfer start point (step S31). This calculation is performed as illustrated in FIG. 20B on the basis of assumption illustrated in FIG. 20A.

Referring back to FIG. 19, the content transfer processor 15 subsequently displays the content at a position in the transfer direction designated as the transfer distance (step S32).

The content transfer processor 15 subsequently calculates a transfer angle from the position of the content and the transfer start point, or calculates the transfer angle per unit time (step S33). This calculation is performed as illustrated in FIG. 20C.

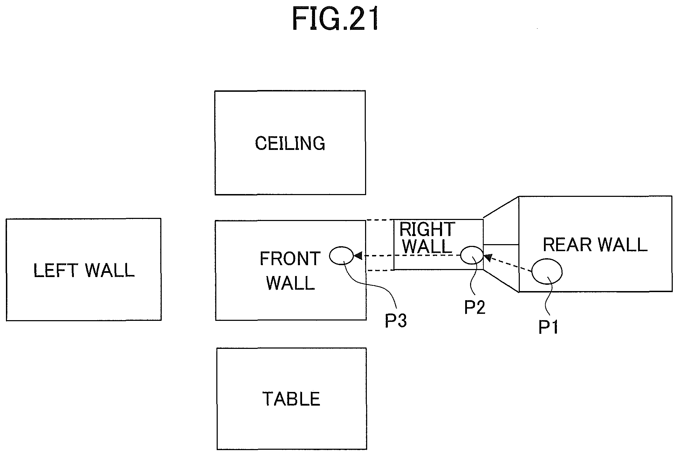

Note that the transfer angle per unit time is calculated in order to handle a case where the resolution and the connection range of the display are different between displays, as illustrated in FIG. 21. That is, in FIG. 21, the right side of the right wall is connected along the entire range of the left side of the rear wall such that magnification or compression may be performed, however, the left side of the right wall is connected only to the upper half of the right side of the front wall. Therefore, when the content C1 at the lower position P1 on the rear wall is assumed to horizontally be moved to the left, the content C1 will also be moved to a lower position P2 on the right wall; however, when the content C1 is further moved to the front wall, the content C1 will be moved to an upper position P3 on the front wall. Accordingly, the position will be misaligned only with respect to the transfer angle between the transfer start time and the current position of the content. Thus, in such a case, it is preferable to obtain the transfer angle per unit time, and accumulate the obtained transfer angles in order to determine, based on the accumulated transfer angles, the position to which the content is transferred.

Referring back to FIG. 19, the content transfer processor 15 determines whether the transfer angle has attained 0 (a value that may be regarded as 0 in consideration of an error) or whether a total of the transfer angles per unit time has attained 2n radians (a value that may be regarded as 2n radians in consideration of an error) corresponding to a circumference (a turn) (step S34).

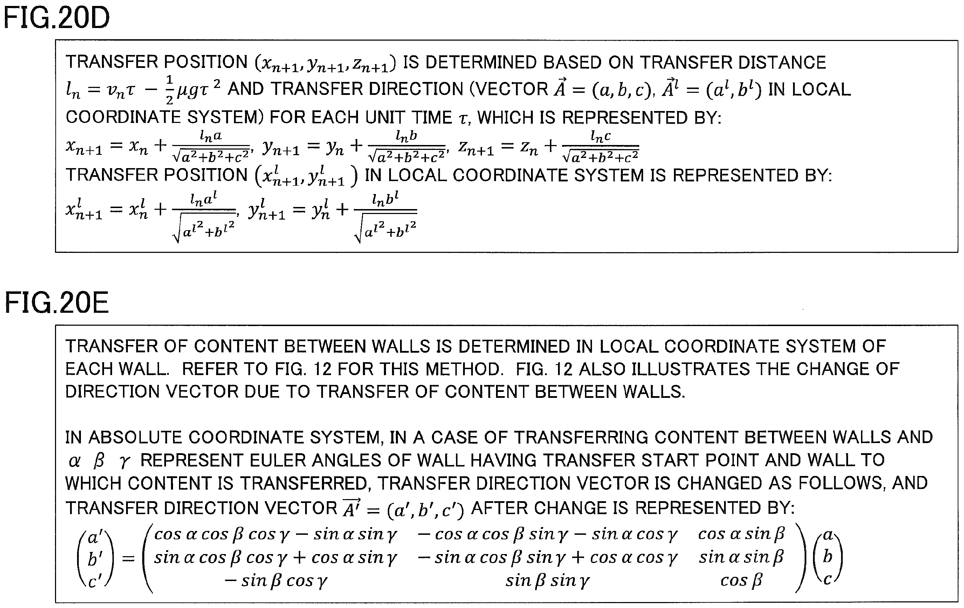

Subsequently, when the content transfer processor 15 determines that the transfer angle has not attained 0 or the total of the transfer angles per unit time has not attained 2n radians (No in step S34), the content transfer processor 15 calculates the transfer distance at a time at which the unit time has elapsed from that position (calculates the transfer distance by updating the transfer direction vector when transferred between walls) (in step S35). This calculation is performed as illustrated in FIGS. 20D and 20E.

Referring back to FIG. 19, when the content transfer processor 15 determines that the transfer angle is 0 or the total of the transfer angles has attained 2n (Yes in step S34), the content transfer processor 15 stops transferring the content (step S36).

FOURTH PROCESS EXAMPLE

In a fourth process example, instead of stopping the transferred content abruptly at the boundary or at the transfer start position in the process example described above, the transferred content will be stopped naturally by setting of the dynamic friction coefficient such that the local maximum value of the dynamic friction coefficient will be at the boundary or at the transfer start position. In addition, since an increase in the dynamic friction coefficient near the boundary or the like will hinder the start of transfer, the dynamic friction coefficient is reduced immediately after the start of the transfer.

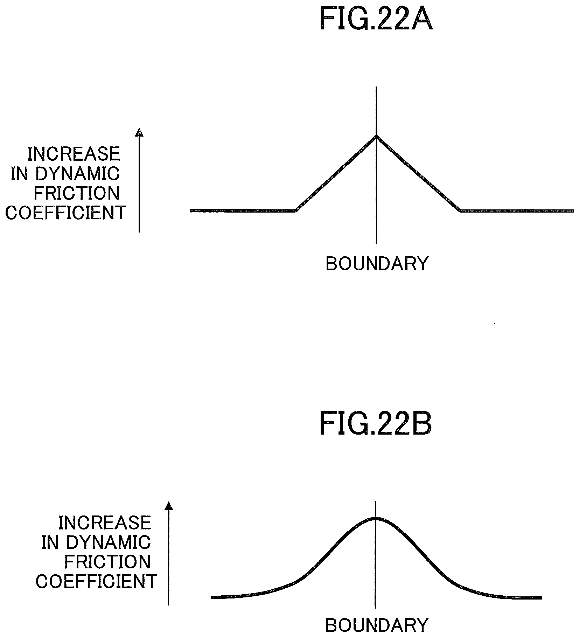

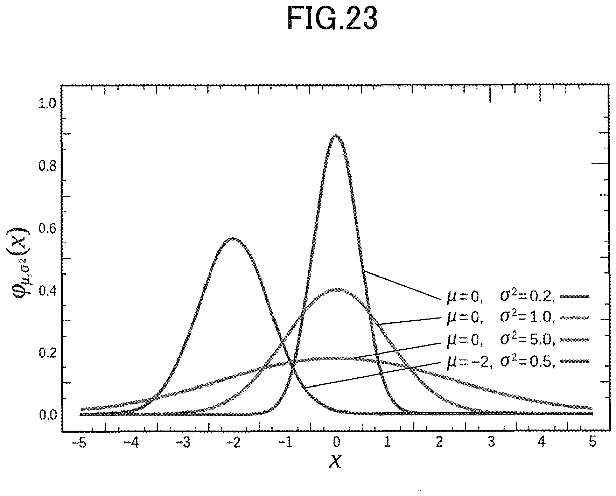

FIGS. 22A and 22B are diagrams illustrating an example of setting of a dynamic friction coefficient in the vicinity of a boundary in the fourth process example. In FIG. 22A, the dynamic friction coefficient is linearly increased in the vicinity of the boundary or the like. In this case, the dynamic friction coefficient may be set by a linear equation based on positional coordinates of the content. In FIG. 22B, the dynamic friction increases in a curve in the vicinity of the boundary or the like. In this case, the dynamic friction coefficient may be set by a formula such as a normal distribution with respect to positional coordinates of the content. FIG. 23 is a diagram illustrating examples of a normal distribution, indicating that various characteristics may be obtained by changing the mean or dispersion value.

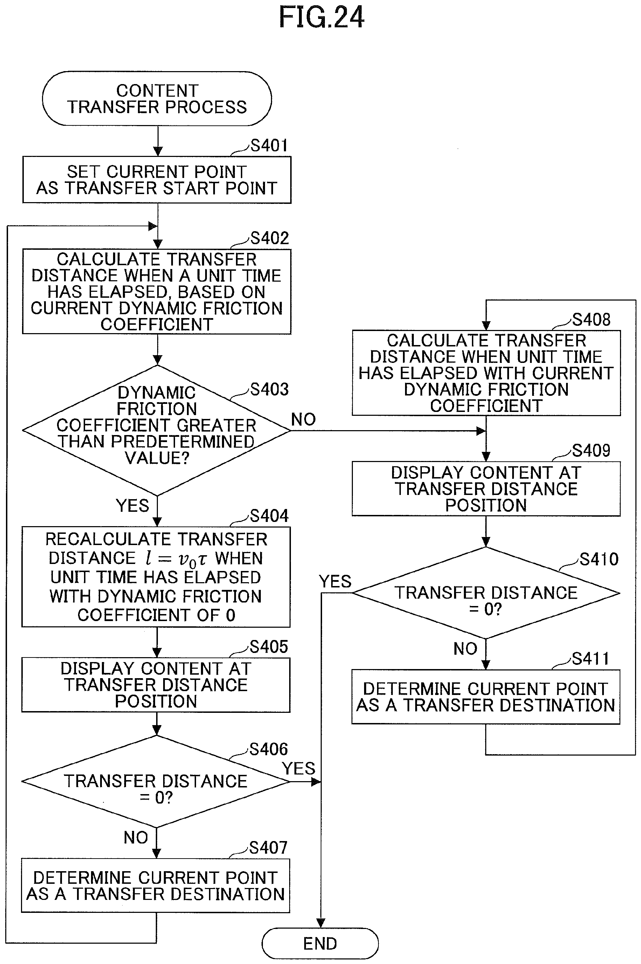

FIG. 24 is a diagram illustrating a flowchart in the fourth process example, which indicates a process corresponding to the content transfer process (step S108) in FIG. 9. In FIG. 24, when starting the process, the content transfer processor 15 sets a current point as a transfer start point (step S401).

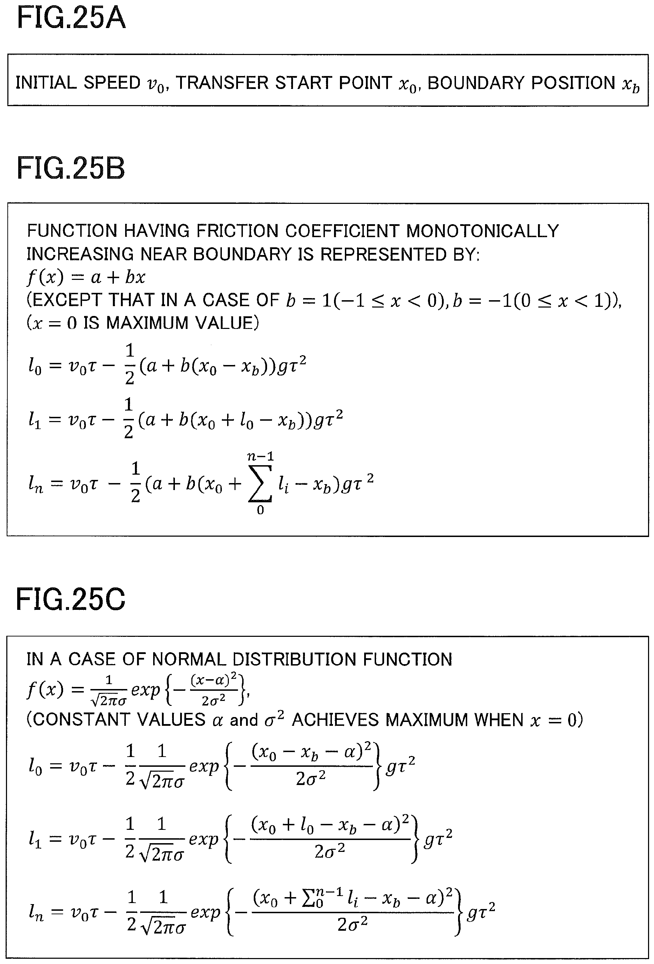

Subsequently, the content transfer processor 15 calculates the transfer distance at a time at which a unit time has elapsed, based on the current dynamic friction coefficient (step S402). On the basis of the assumption illustrated in FIG. 25A, the calculation is performed as illustrated in FIG. 25B with respect to the characteristic of FIG. 22A, and the calculation is performed as illustrated in FIG. 25C with respect to the characteristic of FIG. 22B. In FIGS. 25B and 25C, $l_0$ is the first transfer distance of the first unit time after the start of transfer, $l_1$ is the second transfer distance of the second unit time subsequent to the first unit time and $l_n$ is the (n-1)th transfer distance of the (n-1)th unit time.

Referring back to FIG. 24, the content transfer processor 15 determines whether the dynamic friction coefficient is greater than a predetermined value (step S403). When the content transfer processor 15 determines that the dynamic friction coefficient is greater than the predetermined value (Yes in step S403), the content transfer processor 15 recalculates the transfer distance $l = v_0\tau$ at a time for which the unit time has elapsed, for example, with a dynamic friction coefficient of 0 (step S404), and displays the content at the transfer distance position (step S405).

Subsequently, the content transfer processor 15 determines whether the transfer distance is 0 (step S406). When the content transfer processor 15 determines that the transfer distance is not 0 (No in step S406), the content transfer processor 15 determines the current point as a transfer destination (step S407) and returns to the calculation of the transfer distance (step S402). When the content transfer processor 15 determines that the transfer distance is 0 (Yes in step S406), the content transfer processor 15 ends the process.

Further, when the content transfer processor 15 determines that the dynamic friction coefficient is not greater than the predetermined value (No in step S403), the content transfer processor 15 displays the content at the transfer distance position (step S409), and determines whether the transfer distance is 0 (step S410).

When the content transfer processor 15 determines that the transfer distance is not 0 (No in step S410), the content transfer processor 15 calculates the transfer distance at a time at which the unit time has elapsed with the current dynamic friction coefficient (step S408), using the current time as the transfer destination (step S411), and shifts to the display of the content (step S409). When the content transfer processor 15 determines that the transfer distance is 0 (Yes in step S410), the content transfer processor 15 ends the process.

LOCAL COORDINATES AND ABSOLUTE COORDINATES

Local coordinates are coordinates of a two-dimensional plane of the display area of each display unit 4. For example, a lower left corner of each display unit 4 is the origin, a vertical axis is an x axis, and a horizontal axis is a y axis. Absolute coordinates are physical three-dimensional coordinates.

Displaying (drawing) content and transferring determination of content between displays in each of the process examples described above may preferably be performed with local coordinates, and calculating the transfer angle in the third process example may preferably be performed with absolute coordinates. The transfer of contents is more easily to be determined with local coordinates. The transfer angle is more easily to be calculated with absolute coordinates.

TRANSFER DETERMINATION BETWEEN DISPLAYS

The arrangement of the display of FIG. 10 will be described with an example. It is assumed that the origin of the local coordinates of the display on the right wall is the lower left corner, the size of the display area in the vertical direction (x axis direction) is $a_r$, and the size of the display area in the right direction (y axis direction) is $b_r$.

It is assumed that when the content is on the right wall, the original position before transfer is $(x_n, y_n)$ and the position of the destination after transfer is $(x_{n+1}, y_{n+1})$, such that
$0 \leq x_{n+1} \leq a_r$, $0 \leq y_{n+1} \leq b_r$ is obtained. In this case, it is determined that the content is on the same right wall, and at other times the content may be determined to be transferred to the adjacent wall.

That is, the following may be determined: $a_r < x_{n+1}$, $0 \leq y_{n+1} \leq b_r \rightarrow$ transferred to the ceiling $x_{n+1} < 0$, $0 \leq y_{n+1} \leq b_r \rightarrow$ transferred to the table $0 \leq x_{n+1} \leq a_r$, $b_r < y_{n+1} \rightarrow$ transferred to the rear wall $0 \leq x_{n+1} \leq a_r$, $y_{n+1} < 0 \rightarrow$ transferred to the front wall.

In transferring the content to each position, when the direction of the local coordinates is the same (e.g., the walls of the left and right and front and rear are in the same direction), the vector in the transfer direction will not change. When x and y axes are interchanged between the walls and the table, and the walls and the ceiling, x and y of the vector will be swapped. The direction of the axis that is opposite may be handled by reversing the signs. Calculation of the transfer angle is easily performed with absolute coordinates, in conjunction with calculation with the local coordinates.

INTERCONVERSION BETWEEN LOCAL COORDINATES AND ABSOLUTE COORDINATES

In the display management table T1 (FIG. 7), the plane direction and the absolute coordinates of the base point and the screen physical size are managed for each display, which enables the local coordinates to be converted into absolute coordinates.

Such a management in the display management table T1 also enables conversion of the transfer direction vector on the display in one plane direction to the transfer direction vector on the display in the other plane direction.

The arrangement of the display of FIG. 10 will be described with an example. For example, for the right wall and the rear wall, when rotation is assumed at the Euler angles $\alpha$, $\beta$, and $\gamma$, the transfer direction vector A = $(x_a, y_a, z_a)$ on the right wall becomes a transfer direction vector A' as the content is transferred to the rear wall. A' = BA based on a rotation matrix B obtained from $\alpha$, $\beta$ and $\gamma$.

Rotation with respect to each display surface may be determined in advance by setting a reference surface (e.g., the front wall) and the rotation from the reference surface by the Euler angles or the like. In the example of FIG. 10, five rotations with respect to front wall, right wall, left wall, rear wall, ceiling and table are determined in advance. Accordingly, it is only necessary for the content to pass through the front wall once for the rotation between desired surfaces. For example, to rotate the content to the table from the right wall, it is sufficient to perform rotation from the right to the front and rotation from the front to the table. It is assumed that R represents the rotation matrix from the front wall to the right wall, L represents the rotation matrix from the front wall to the left wall, B represents the rotation matrix from the front wall to the rear wall, C represents the rotation matrix of the ceiling, and T represents the rotation matrix of the table. In this case, a transferred vector A' of the transfer direction vector A from the right wall to the table is represented by the following formula:

$$A' = TR^{-1}A$$

where $R^{-1}$ is an inverse matrix of R. Likewise, it is possible to define transfers between all the adjacent walls (12 ways $\times$ 2 = 24 ways, including the transferring of the content in the opposite directions).

OVERVIEW

As described above, according to the above-described embodiments, it is possible to stop a content that has undergone a transfer operation without from continuing to be transferred even in a case where the display areas are arranged in a loop.

The display unit 4 is an example of a "display unit". The display control apparatus 3 is an example of a "display controller". The content transfer processor 15 is an example of a "content controller". The loop determination unit 18 is an example of a "stop unit".

The preferred embodiments are described above. The embodiments of the present invention are illustrated with specific examples; however, the present invention is not limited to these examples, and various alterations or changes may be made without departing from the scope of the claims. Specifically, the present invention shall not be construed as being limited to details of the specific examples and accompanying drawings thereof.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority or inferiority of the invention. Although the embodiments of the present invention have been described in detail, it should be understood that the various changes, substitutions, and alterations could be made hereto without departing from the scope of the invention as defined by the appended claims.

**Claims**

1. A content control apparatus comprising:

   a plurality of display units (4) having respective display areas arranged in a loop;
   a display controller (3) configured to display a content on any one of the plurality of display units (4);
   an instruction receiver (14) configured to receive a content transfer instruction, which is input by a sliding operation on the content displayed on a corresponding one of the display units (4) and is accompanied by a content ID and a sliding speed;
   a content controller (15) configured to, in response to receiving the content transfer instruction:

      record, in a memory, a transfer start position in accordance with the content ID, and transfer the content from the display unit (4) that initially displays the content, to pass sequentially through other display units (4); and

   a stop unit (18) configured to stop the content that passes through the plurality of display units (4) arranged in the loop and returns at a boundary defined based on the transfer start position recorded in accordance with the content ID of the content.

2. The content control apparatus as claimed in claim 1, wherein
   the stop unit (18) stops the content in response to the transferred content attaining a boundary set as a transfer start position for each content.

3. The content control apparatus as claimed in claim 1, wherein
   an angle is formed between a straight line extending from a center of a circumscribed sphere of a space in which the plurality of display units (4) are arranged to a transfer start position for each content and a straight line extending from the center of the circumscribed sphere to a position of the transferred content, and wherein
the stop unit (18) stops the content in response to the formed angle attaining a value determined as zero.

4. The content control apparatus as claimed in claim 1, wherein
an angle is formed between a straight line extending from a center of a circumscribed sphere of a space in which the plurality of display units (4) are arranged to a transfer start position for each content and a straight line extending from the center of the circumscribed sphere to a position of the transferred content, and a transfer angle of the formed angle from a start of the transfer of the content is accumulated per unit time, and wherein
the stop unit (18) stops the content in response to an accumulated value of the transfer angle from the start of the transfer attaining a value determined as a circumference of the circumscribed sphere.

5. The content control apparatus as claimed in any one of claims 1 to 4, wherein
the content controller (15) decelerates the content, according to a dynamic friction coefficient indicating a local maximum value at the predetermined position, by applying a reduced value of the dynamic friction coefficient from a start of the transfer of the content throughout an interval of the dynamic friction coefficient exceeding a predetermined value, and subsequently decelerates the content by applying the dynamic friction coefficient.

6. The content control apparatus as claimed in claim 1, wherein
a dynamic friction coefficient, which is defined in accordance with a speed determination and a determination of a specific input transfer instruction, is increased depending on a transfer distance of the content, and the stop unit (18) is configured to stop, at the transfer start position, the content returning to the transfer start position.

7. A content control method performed by the content control apparatus of claim 1, the content control method comprising:

displaying a content on any one of a plurality of display units (4) having respective display areas arranged in a loop;
receiving a content transfer instruction, which is input by a sliding operation on the content displayed on a corresponding one of the display units (4) and is accompanied by a content ID and a sliding speed;
recording, in a memory, a transfer start position in accordance with the content ID in response to receiving the content transfer instructions;
transferring, also in response to receiving the content transfer instruction, the content from the display unit (4) that initially displays the content, to pass sequentially through other display units (4); and
stopping the content that passes through the plurality of display units (4) arranged in the loop and returns at a boundary defined based on the transfer start position recorded in accordance with the content ID of the content.

8. The content control method as claimed in claim 7, wherein
the stopping includes the content in response to the transferred content attaining a boundary set as a transfer start position for each content.

**Patentansprüche**

1. Inhaltssteuerungsvorrichtung, die Folgendes aufweist:

eine Vielzahl an Anzeigeeinheiten (4), die jeweilige Anzeigebereiche aufweisen, die in einer Schleife angeordnet sind;
eine Anzeigesteuerung (3), die konfiguriert ist, um einen Inhalt auf einer der Vielzahl an Anzeigeeinheiten (4) anzuzeigen;
einen Befehlsempfänger (14), der konfiguriert ist, um einen Inhaltsübertragungsbefehl zu empfangen, welcher durch eine Streichoperation in Bezug auf den Inhalt, der auf einer entsprechenden der Anzeigeeinheiten (4) angezeigt wird, eingegeben wird und von einer Inhalts-ID und einer Streichgeschwindigkeit begleitet wird;
eine Inhaltssteuerung (15), die konfiguriert ist, um als Reaktion auf das Empfangen des Inhaltsübertragungsbefehls:

in einem Speicher eine Übertragungsstartposition gemäß der Inhalts-ID aufzuzeichnen, und
den Inhalt von der Anzeigeeinheit (4), die anfangs den Inhalt anzeigt, zu übertragen, um der Reihe nach andere Anzeigeeinheiten (4) zu durchlaufen; und

eine Stoppeinheit (18), die konfiguriert ist, um den Inhalt zu stoppen, der die Vielzahl an Anzeigeeinheiten (4), die in der Schleife angeordnet sind, durchläuft und an einer Grenze, die basierend auf der Übertragungsstartposition definiert ist, die gemäß der Inhalts-ID des Inhalts aufgezeichnet ist, zurückkehrt.

**2.** Inhaltssteuerungsvorrichtung nach Anspruch 1, wobei
die Stoppeinheit (18) den Inhalt als Reaktion darauf, dass der übertragene Inhalt eine Grenze erreicht, die als eine Übertragungsstartposition für jeden Inhalt festgelegt ist, stoppt.

**3.** Inhaltssteuerungsvorrichtung nach Anspruch 1, wobei
ein Winkel zwischen einer geraden Linie, die sich von einem Mittelpunkt einer Umkugel eines Raums, in welchem die Vielzahl an Anzeigeeinheiten (4) angeordnet sind, zu einer Übertragungsstartposition für jeden Inhalt erstreckt, und einer geraden Linie, die sich von dem Mittelpunkt der Umkugel zu einer Position des übertragenen Inhalts erstreckt, gebildet ist, und wobei
die Stoppeinheit (18) den Inhalt als Reaktion darauf, dass der gebildete Winkel einen Wert erreicht, der als Null bestimmt ist, stoppt.

**4.** Inhaltssteuerungsvorrichtung nach Anspruch 1, wobei
ein Winkel zwischen einer geraden Linie, die sich von einem Mittelpunkt einer Umkugel eines Raums, in welchem die Vielzahl an Anzeigeeinheiten (4) angeordnet sind, zu einer Übertragungsstartposition für jeden Inhalt erstreckt, und einer geraden Linie, die sich von dem Mittelpunkt der Umkugel zu einer Position des übertragenen Inhalts erstreckt, gebildet ist, und ein Übertragungswinkel des gebildeten Winkels von einem Start der Übertragung des Inhalts pro Zeiteinheit gesammelt wird, und wobei
die Stoppeinheit (18) den Inhalt als Reaktion darauf, dass ein gesammelter Wert des Übertragungswinkels von dem Start der Übertragung einen Wert erreicht, der als eine Umkreisung der Umkugel bestimmt ist, stoppt.

**5.** Inhaltssteuerungsvorrichtung nach einem der Ansprüche 1 bis 4, wobei
die Inhaltssteuerung (15) den Inhalt gemäß einem dynamischen Reibungskoeffizienten, der einen lokalen Höchstwert in der vorbestimmten Position angibt, verlangsamt, indem ein verringerter Wert des dynamischen Reibungskoeffizienten von einem Start der Übertragung des Inhalts durch ein Intervall des dynamischen Reibungskoeffizienten, der einen vorbestimmten Wert überschreitet, angewendet wird, und darauf folgend den Inhalt durch Anwenden des dynamischen Reibungskoeffizienten verlangsamt.

**6.** Inhaltssteuerungsvorrichtung nach Anspruch 1, wobei

ein dynamischer Reibungskoeffizient, welcher gemäß einer Geschwindigkeitsbestimmung und einer Bestimmung eines spezifischen Eingabe-Übertragungsbefehls definiert ist, je nach einer Übertragungsdistanz des Inhalts erhöht wird, und die Stoppeinheit (18) konfiguriert ist, um in der Übertragungsstartposition den Inhalt, der zu der Übertragungsstartposition zurückkehrt, zu stoppen.

**7.** Inhaltssteuerungsverfahren, das von der Inhaltssteuerungsvorrichtung nach Anspruch 1 durchgeführt wird, wobei das Inhaltssteuerungsverfahren Folgendes umfasst:

Anzeigen eines Inhalts auf einer einer Vielzahl an Anzeigeeinheiten (4), die jeweilige Anzeigebereiche aufweisen, die in einer Schleife angeordnet sind;
Empfangen eines Inhaltsübertragungsbefehls, welcher durch eine Streichoperation in Bezug auf den Inhalt, der auf einer entsprechenden der Anzeigeeinheiten (4) angezeigt wird, eingegeben wird und von einer Inhalts-ID und einer Streichgeschwindigkeit begleitet wird;
Aufzeichnen in einem Speicher einer Übertragungsstartposition gemäß der Inhalts-ID als Reaktion auf das Empfangen der Inhalt-Übertragungsbefehle;
Übertragen, auch als Reaktion auf das Empfangen des Inhaltsübertragungsbefehls, des Inhalts von der Anzeigeeinheit (4), die anfangs den Inhalt anzeigt, um der Reihe nach andere Anzeigeeinheiten (4) zu durchlaufen; und
Stoppen des Inhalts, der die Vielzahl an Anzeigeeinheiten (4) durchläuft, die in der Schleife angeordnet sind, und an einer Grenze, die basierend auf der Übertragungsstartposition definiert ist, die gemäß der Inhalts-ID des Inhalts aufgezeichnet wird, zurückkehrt.

**8.** Inhaltssteuerungsverfahren nach Anspruch 7, wobei das Stoppen umfasst, dass der Inhalt als Reaktion auf den übertragenen Inhalt eine Grenze erreicht, die als eine Übertragungsstartposition für jeden Inhalt festgelegt ist.

## Revendications

**1.** Appareil de commande de contenu, comprenant :

une pluralité d'unités d'affichage (4) ayant des zones d'affichage respectives agencées en une boucle ;
un dispositif de commande d'affichage (3) configuré pour afficher un contenu sur l'une quelconque de la pluralité d'unités d'affichage (4) ;
un récepteur d'instruction (14) configuré pour recevoir une instruction de transfert de contenu, qui est entrée par une opération de glissement sur le contenu affiché sur l'une correspondante des unités d'affichage (4) et est accompagnée d'un identifiant, ID, de contenu et d'une vitesse de glissement ;

un dispositif de commande de contenu (15) configuré pour, en réponse à la réception de l'instruction de transfert de contenu :

enregistrer, dans une mémoire, une position de début de transfert conformément à l'ID de contenu, et

transférer le contenu à partir de l'unité d'affichage (4) qui affiche initialement le contenu, pour passer séquentiellement à travers d'autres unités d'affichage (4) ; et

une unité d'arrêt (18) configurée pour arrêter le contenu qui passe à travers la pluralité d'unités d'affichage (4) agencées dans la boucle et revient à une limite définie sur la base de la position de début de transfert enregistrée conformément à l'ID de contenu du contenu.

2. Appareil de commande de contenu selon la revendication 1, dans lequel
l'unité d'arrêt (18) arrête le contenu en réponse au contenu transféré atteignant une limite établie en tant que position de début de transfert pour chaque contenu.

3. Appareil de commande de contenu selon la revendication 1, dans lequel
un angle est formé entre une ligne droite s'étendant à partir d'un centre d'une sphère circonscrite d'un espace dans lequel la pluralité d'unités d'affichage (4) sont agencées jusqu'à une position de début de transfert pour chaque contenu et une ligne droite s'étendant depuis le centre de la sphère circonscrite jusqu'à une position du contenu transféré, et dans lequel
l'unité d'arrêt (18) arrête le contenu en réponse à l'angle formé atteignant une valeur déterminée en tant que zéro.

4. Appareil de commande de contenu selon la revendication 1, dans lequel
un angle est formé entre une ligne droite s'étendant à partir d'un centre d'une sphère circonscrite d'un espace dans lequel la pluralité d'unités d'affichage (4) sont agencées vers une position de début de transfert pour chaque contenu et une ligne droite s'étendant depuis le centre de la sphère circonscrite vers une position du contenu transféré, et un angle de transfert de l'angle formé à partir d'un début du transfert du contenu est cumulé par unité de temps, et dans lequel

l'unité d'arrêt (18) arrête le contenu en réponse à une valeur cumulée de l'angle de transfert depuis le début du transfert atteignant une valeur déterminée en tant que circonférence de la sphère circonscrite.

5. Appareil de commande de contenu selon l'une quelconque des revendications 1 à 4, dans lequel
le dispositif de commande de contenu (15) décélère le contenu, selon un coefficient de frottement dynamique indiquant une valeur maximale locale au niveau de la position prédéterminée, en appliquant une valeur réduite du coefficient de frottement dynamique à partir d'un début du transfert du contenu sur un intervalle du coefficient de frottement dynamique dépassant une valeur prédéterminée, puis décélère le contenu en appliquant le coefficient de frottement dynamique.

6. Appareil de commande de contenu selon la revendication 1, dans lequel
un coefficient de frottement dynamique, qui est défini conformément à une détermination de vitesse et à une détermination d'une instruction de transfert d'entrée spécifique, est augmenté en fonction d'une distance de transfert du contenu, et l'unité d'arrêt (18) est configurée pour arrêter, au niveau de la position de début de transfert, le contenu retournant à la position de début du transfert.

7. Procédé de commande de contenu exécuté par l'appareil de commande de contenu selon la revendication 1, le procédé de commande de contenu comprenant les étapes consistant à :

afficher un contenu sur l'une quelconque d'une pluralité d'unités d'affichage (4) ayant des zones d'affichage respectives agencées en une boucle ;

recevoir une instruction de transfert de contenu, qui est entrée par une opération de glissement sur le contenu affiché sur l'une correspondante des unités d'affichage (4) et est accompagnée d'un ID de contenu et d'une vitesse de glissement ;

enregistrer, dans une mémoire, une position de début de transfert conformément à l'ID de contenu en réponse à la réception des instructions de transfert de contenu ;

transférer, également en réponse à la réception de l'instruction de transfert de contenu, le contenu provenant de l'unité d'affichage (4) qui affiche initialement le contenu, pour passer séquentiellement à travers d'autres unités d'affichage (4) ; et

arrêter le contenu qui passe à travers la pluralité d'unités d'affichage (4) agencées dans la boucle et revient à une limite définie sur la base de la position de début de transfert enregistrée conformément à l'ID de contenu du contenu.

8. Procédé de commande de contenu selon la revendication 7, dans lequel
l'arrêt comprend le contenu, en réponse au contenu transféré, atteignant une limite établie en tant que position de début de transfert pour chaque contenu.

# FIG.1

CEILING

WALL

WALL

TABLE

FLOOR

EP 3 324 283 B1

# FIG.2

PERSONAL WORK SPACE

SHARED SPACE

C1

C2

# FIG.3A

CEILING

FRONT WALL

LEFT
WALL

RIGHT
WALL

TABLE

REAR WALL

# FIG.3B

CEILING

LEFT
WALL

FRONT WALL

RIGHT
WALL

TABLE

REAR WALL

# FIG.3C

| CEILING | | |
| LEFT WALL | FRONT WALL | RIGHT WALL | REAR WALL |
| | TABLE | | |

FIG.4

EP 3 324 283 B1

FIG.5

1 SERVER APPARATUS

2

3C (CEILING) DISPLAY CONTROL APPARATUS — 4C (CEILING) DISPLAY

3L (LEFT WALL) DISPLAY CONTROL APPARATUS — 4L (LEFT WALL) DISPLAY

3F (FRONT WALL) DISPLAY CONTROL APPARATUS — 4F (FRONT WALL) DISPLAY

3R (RIGHT WALL) DISPLAY CONTROL APPARATUS — 4R (RIGHT WALL) DISPLAY

3T (TABLE) DISPLAY CONTROL APPARATUS — 4T (TABLE) DISPLAY

3B (REAR WALL) DISPLAY CONTROL APPARATUS — 4B (REAR WALL) DISPLAY

**FIG.6**

SERVER APPARATUS — 1

- CONTENT CREATING INSTRUCTION RECEIVER — 11
- CONTENT CREATING UNIT — 12
- CONTENT MANAGEMENT TABLE — T2
- DISPLAY MANAGEMENT TABLE — T1
- CONTENT POSITION REPORTING UNIT — 13
- DISPLAY CONNECTION RELATIONSHIP DETERMINATION UNIT — 16
- CONTENT TRANSFER INSTRUCTION RECEIVER — 14
- CONTENT TRANSFER PROCESSOR — 15
- CONTENT TRANSFER SPEED DETERMINATION UNIT — 17
- LOOP DETERMINATION UNIT — 18

DISPLAY CONTROL APPARATUS — 3

- INPUT PROCESSOR — 31
- CONTENT CREATING INSTRUCTION REPORTING UNIT — 32
- CONTENT TRANSFER INSTRUCTION REPORTING UNIT — 33
- CONTENT POSITION RECEIVER — 34
- CONTENT POSITION CONTROLLER — 35
- BROWSER — 36

## FIG.7

T1

| DISPLAY ID | (PLANE DIRECTION) | (ABSOLUTE COORDINATES) | (SCREEN PHYSICAL SIZE) | SCREEN RESOLUTION | LEFT SIDE CONNECTION INFORMATION | RIGHT SIDE CONNECTION INFORMATION | UPPER SIDE CONNECTION INFORMATION | LOWER SIDE CONNECTION INFORMATION | .. |
|---|---|---|---|---|---|---|---|---|---|

| (ABSOLUTE COORDINATES OF CIRCUMSCRIBED SPHERE) | (CIRCUMSCRIBED SPHERE RADIUS) | .. |
|---|---|---|

T2

| CONTENT ID | TYPE | CONTENT | DISPLAY ID | LOCAL COORDINATES | (ABSOLUTE COORDINATES) | .. |
|---|---|---|---|---|---|---|

# FIG.8

~1, 3

SERVER APPARATUS/ DISPLAY CONTROL APPARATUS

| ~101 | ~102 | ~103 | ~104 |
|------|------|------|------|
| CPU | ROM | RAM | HDD/SSD |

~107

| CONNECTION I/F | COMMUNICATION I/F |
|----------------|-------------------|

~105

~106

# FIG.9

EP 3 324 283 B1

FIG.10

# FIG.11

# FIG.12

# FIG.13

```
        CONTENT                    STOP FLAG IS ON WHEN
    TRANSFER PROCESS               CONTENT IS CREATED
```

S11
**TRANSFER CONTENT**

S12
IS CONTENT
ABOUT TO PASS THROUGH
BOUNDARY?

NO

YES

S13
IS STOP
FLAG ON FOR
CONTENT ABOUT TO
PASS THROUGH
BOUNDARY?

NO

YES

S14
**STOP TRANSFER OF CONTENT**

S16
**PASS CONTENT THROUGH BOUNDARY**

S15
**TURN OFF STOP FLAG**

S17
**TURN ON STOP FLAG**

FIG.14

EP 3 324 283 B1

# FIG.15

# FIG.16

| CONTENT ID | BOUNDARY COORDINATES (TRANSFER START POSITION) | ‥ |
|---|---|---|
| | | |

# FIG.17

```
        ╭─────────────────────╮
        │      CONTENT        │
        │  TRANSFER PROCESS   │
        ╰─────────────────────╯
                  │
                  ▼            S21
        ┌─────────────────────┐
        │  RECORD CONTENT ID AND │
        │ TRANSFER START POSITION │
        │  TO CREATE PROVISIONAL │
        │       BOUNDARY         │
        └─────────────────────┘
                  │
                  ▼            S22
        ┌─────────────────────┐
        │  TRANSFER CONTENT   │
        └─────────────────────┘
                  │
                  ▼            S23
              ◇─────────◇
        NO   IS CONTENT
    ◄──── ABOUT TO PASS THROUGH
              BOUNDARY?
              ◇─────────◇
                  │
                 YES
                  ▼            S24
              ◇─────────◇
         CONTENT ID OF
      CONTENT ABOUT TO PASS
    THROUGH MATCHES CONTENT ID   NO
      ASSOCIATED WITH PRO-    ─────►
       VISIONAL BOUNDARY
          COORDINATES
              ?
              ◇─────────◇
                  │
                 YES
                  ▼   S25                    S27
        ┌─────────────────────┐    ┌─────────────────────┐
        │ STOP TRANSFER OF CONTENT │  │   PASS CONTENT      │
        └─────────────────────┘    │ THROUGH BOUNDARY    │
                  │                 └─────────────────────┘
                  ▼   S26
        ┌─────────────────────┐
        │ ERASE RECORDED POSITION │
        │  AND DELETE PROVISIONAL │
        │       BOUNDARY         │
        └─────────────────────┘
```

29

INTERSECTION POINT $(x_{0'}, y_{0'}, z_{0'})$ OF STRAIGHT LINE CONNECTING CENTER OF CIRCUMSCRIBED SPHERE AND MOVEMENT START POINT AND CIRCUMSCRIBED SPHERICAL SURFACE

CEILING

FRONT WALL

RIGHT WALL

LEFT WALL

TABLE

REAR WALL

CEILING

FRONT WALL

LEFT WALL

RIGHT WALL

REAR WALL

TABLE

TRANSFER START POINT $(x_0, y_0, z_0)$

TRANSFER ANGLE $\theta_n$

CENTER POINT $(x_b, y_b, z_b)$ OF CIRCUMSCRIBED SPHERE

INTERSECTION POINT $(x_{n'}, y_{n'}, z_{n'})$ OF STRAIGHT LINE CONNECTING CENTER OF CIRCUMSCRIBED SPHERE AND TRANSFER START POINT AND CIRCUMSCRIBED SPHERICAL SURFACE

FIG.18

EP 3 324 283 B1

# FIG.19

```
        ┌─────────────────────────┐
        │        CONTENT          │
        │   TRANSFER PROCESS      │
        └─────────────────────────┘
                    │
                    ▼                    S31
┌───────────────────────────────────────┐
│ CALCULATE TRANSFER DISTANCE FROM       │
│ TRANSFER START POINT TO POINT AT       │
│ WHICH UNIT TIME HAS ELAPSED            │
└───────────────────────────────────────┘
                    │
                    ▼                    S32
┌───────────────────────────────────────┐
│ DISPLAY CONTENT AT POSITION IN         │
│ TRANSFER DIRECTION DESIGNATED AS       │
│ TRANSFER DISTANCE                      │
└───────────────────────────────────────┘
                    │
                    ▼                    S33
┌───────────────────────────────────────┐
│ CALCULATE TRANSFER ANGLE FROM          │
│ POSITION OF CONTENT AND TRANSFER       │
│ START POINT, OR CALCULATE              │
│ TRANSFER ANGLE PER UNIT TIME           │
└───────────────────────────────────────┘
                    │
                    ▼                    S34
              ╱─────────────╲
         ╱   HAS TRANSFER       ╲
    ╱    ANGLE REACHED 0, OR HAS   ╲          YES
   ╱   A TOTAL OF TRANSFER ANGLES    ╲────────────┐
    ╲    PER UNIT TIME REACHED       ╱            │
         ╲        2π ?           ╱                │
              ╲─────────────╱                     │
                    │ NO                          │
                    ▼              S35            ▼           S36
┌───────────────────────────────────────┐   ┌──────────────────┐
│ CALCULATE TRANSFER DISTANCE WHEN       │   │ STOP TRANSFER    │
│ UNIT TIME HAS ELAPSED FROM THAT        │   │ OF CONTENT       │
│ POSITION (CALCULATE TRANSFER           │   └──────────────────┘
│ DISTANCE BY UPDATING TRANSFER          │            │
│ DIRECTION VECTOR WHEN                  │            ▼
│ TRANSFERRING BETWEEN WALLS)            │      ┌───────────┐
└───────────────────────────────────────┘      │    END    │
                                                └───────────┘
```

## FIG.20A

TRANSFER START POINT IS $(x_0, y_0, z_0)$, CIRCUMSCRIBING SPHERE IS (CENTER POINT $(x_b, y_b, z_b)$, RADIUS $r$), INITIAL VELOCITY IS $v_0$.
FURTHER, TRANSFER START POINT IN LOCAL COORDINATE SYSTEM OF WALL WITH TRANSFER START POINT IS $(x_0^l, y_0^l)$.

## FIG.20B

TRANSFER POSITION $(x_1, y_1, z_1)$ IS DETERMINED BASED ON TRANSFER DISTANCE $l_0 = v_0 \tau - \frac{1}{2}\mu g \tau^2$
AND TRANSFER DIRECTION (VECTOR $\vec{A} = (a, b, c)$, VECTOR $\vec{A}^l = (a^l, b^l)$ IN LOCAL COORDINATE SYSTEM) FOR EACH UNIT TIME $\tau$, WHICH IS REPRESENTED BY:

$$x_1 = x_0 + \frac{l_0 a}{\sqrt{a^2+b^2+c^2}}, \quad y_1 = y_0 + \frac{l_0 b}{\sqrt{a^2+b^2+c^2}}, \quad z_1 = z_0 + \frac{l_0 c}{\sqrt{a^2+b^2+c^2}}$$

TRANSFER POSITION $(x_1^l, y_1^l)$ IN LOCAL COORDINATE SYSTEM IS REPRESENTED BY:

$$x_1^l = x_0^l + \frac{l_0 a^l}{\sqrt{a^{l^2}+b^{l^2}}}, \quad y_1^l = y_1^l + \frac{l_0 b^l}{\sqrt{a^{l^2}+b^{l^2}}}$$

## FIG.20C

TRANSFER ANGLE $\theta_n$ FROM TRANSFER START POINT IS REPRESENTED BY:

$$\theta_n = \cos^{-1}\frac{(x_0-x_b)(x_n-x_b)+(y_0-y_b)(y_n-y_b)+(z_0-z_b)(z_n-z_b)}{\sqrt{((x_0-x_b)^2+(y_0-y_b)^2+(z_0-z_b)^2)((x_n-x_b)^2+(y_n-y_b)^2+(z_n-z_b)^2)}}$$

FURTHER, TRANSFER ANGLE $\theta_n$ PER UNIT TIME IS REPRESENTED BY:

$$\theta_n = \cos^{-1}\frac{(x_n-x_b)(x_{n-1}-x_b)+(y_n-y_b)(y_{n-1}-y_b)+(z_n-z_b)(z_{n-1}-z_b)}{\sqrt{((x_n-x_b)^2+(y_n-y_b)^2+(z_n-z_b)^2)((x_{n-1}-x_b)^2+(y_{n-1}-y_b)^2+(z_{n-1}-z_b)^2)}}$$

# FIG.20D

TRANSFER POSITION $(x_{n+1}, y_{n+1}, z_{n+1})$ IS DETERMINED BASED ON TRANSFER DISTANCE $l_n = v_n \tau - \frac{1}{2}\mu g \tau^2$ AND TRANSFER DIRECTION (VECTOR $\vec{A} = (a, b, c)$, $\vec{A}^l = (a^l, b^l)$) IN LOCAL COORDINATE SYSTEM) FOR EACH UNIT TIME $\tau$, WHICH IS REPRESENTED BY:

$$x_{n+1} = x_n + \frac{l_n a}{\sqrt{a^2 + b^2 + c^2}}, \quad y_{n+1} = y_n + \frac{l_n b}{\sqrt{a^2 + b^2 + c^2}}, \quad z_{n+1} = z_n + \frac{l_n c}{\sqrt{a^2 + b^2 + c^2}}$$

TRANSFER POSITION $\left(x^l_{n+1}, y^l_{n+1}\right)$ IN LOCAL COORDINATE SYSTEM IS REPRESENTED BY:

$$x^l_{n+1} = x^l_n + \frac{l_n a^l}{\sqrt{a^{l2} + b^{l2}}}, \quad y^l_{n+1} = y^l_n + \frac{l_n b^l}{\sqrt{a^{l2} + b^{l2}}}$$

# FIG.20E

TRANSFER OF CONTENT BETWEEN WALLS IS DETERMINED IN LOCAL COORDINATE SYSTEM OF EACH WALL. REFER TO FIG. 12 FOR THIS METHOD. FIG. 12 ALSO ILLUSTRATES THE CHANGE OF DIRECTION VECTOR DUE TO TRANSFER OF CONTENT BETWEEN WALLS.

IN ABSOLUTE COORDINATE SYSTEM, IN A CASE OF TRANSFERRING CONTENT BETWEEN WALLS AND $\alpha$ $\beta$ $\gamma$ REPRESENT EULER ANGLES OF WALL HAVING TRANSFER START POINT AND WALL TO WHICH CONTENT IS TRANSFERRED, TRANSFER DIRECTION VECTOR IS CHANGED AS FOLLOWS, AND TRANSFER DIRECTION VECTOR $\vec{A'} = (a', b', c')$ AFTER CHANGE IS REPRESENTED BY:

$$\begin{pmatrix} a' \\ b' \\ c' \end{pmatrix} = \begin{pmatrix} \cos\alpha\cos\beta\cos\gamma - \sin\alpha\sin\gamma & -\cos\alpha\cos\beta\sin\gamma - \sin\alpha\cos\gamma & \cos\alpha\sin\beta \\ \sin\alpha\cos\beta\cos\gamma + \cos\alpha\sin\gamma & -\sin\alpha\cos\beta\sin\gamma + \cos\alpha\cos\gamma & \sin\alpha\sin\beta \\ -\sin\beta\cos\gamma & \sin\beta\sin\gamma & \cos\beta \end{pmatrix} \begin{pmatrix} a \\ b \\ c \end{pmatrix}$$

# FIG.21

CEILING

LEFT WALL

FRONT WALL

RIGHT WALL

REAR WALL

P3

P2

P1

TABLE

# FIG.22A

INCREASE
IN DYNAMIC
FRICTION
COEFFICIENT

BOUNDARY

# FIG.22B

INCREASE
IN DYNAMIC
FRICTION
COEFFICIENT

BOUNDARY

# FIG.23

# FIG.24

CONTENT
TRANSFER PROCESS

S401

SET CURRENT POINT
AS TRANSFER START POINT

S402

CALCULATE TRANSFER
DISTANCE WHEN A UNIT TIME
HAS ELAPSED, BASED ON
CURRENT DYNAMIC FRICTION
COEFFICIENT

S403

DYNAMIC
FRICTION
COEFFICIENT GREATER
THAN PREDETERMINED
VALUE?

NO

S408

CALCULATE TRANSFER
DISTANCE WHEN UNIT TIME
HAS ELAPSED WITH CURRENT
DYNAMIC FRICTION
COEFFICIENT

YES

S404

RECALCULATE TRANSFER
DISTANCE $l = v_0 \tau$ WHEN
UNIT TIME HAS ELAPSED
WITH DYNAMIC FRICTION
COEFFICIENT OF 0

S409

DISPLAY CONTENT AT
TRANSFER DISTANCE
POSITION

S405

DISPLAY CONTENT AT
TRANSFER DISTANCE
POSITION

YES

S410

TRANSFER DISTANCE
= 0?

NO

S411

DETERMINE CURRENT POINT
AS A TRANSFER DESTINATION

S406

TRANSFER DISTANCE
= 0?

YES

NO

S407

DETERMINE CURRENT POINT
AS A TRANSFER DESTINATION

END

37

## FIG.25A

INITIAL SPEED $v_0$, TRANSFER START POINT $x_0$, BOUNDARY POSITION $x_b$

## FIG.25B

FUNCTION HAVING FRICTION COEFFICIENT MONOTONICALLY
INCREASING NEAR BOUNDARY IS REPRESENTED BY:
$f(x) = a + bx$
(EXCEPT THAT IN A CASE OF $b = 1(-1 \leq x < 0), b = -1(0 \leq x < 1)$),
($x = 0$ IS MAXIMUM VALUE)

$$l_0 = v_0\tau - \frac{1}{2}(a + b(x_0 - x_b))g\tau^2$$

$$l_1 = v_0\tau - \frac{1}{2}(a + b(x_0 + l_0 - x_b))g\tau^2$$

$$l_n = v_0\tau - \frac{1}{2}(a + b(x_0 + \sum_0^{n-1} l_i - x_b)g\tau^2$$

## FIG.25C

IN A CASE OF NORMAL DISTRIBUTION FUNCTION
$f(x) = \frac{1}{\sqrt{2\pi}\sigma} exp\left\{-\frac{(x-\alpha)^2}{2\sigma^2}\right\}$,
(CONSTANT VALUES $\alpha$ and $\sigma^2$ ACHIEVES MAXIMUM WHEN $x = 0$)

$$l_0 = v_0\tau - \frac{1}{2}\frac{1}{\sqrt{2\pi}\sigma} exp\left\{-\frac{(x_0 - x_b - \alpha)^2}{2\sigma^2}\right\}g\tau^2$$

$$l_1 = v_0\tau - \frac{1}{2}\frac{1}{\sqrt{2\pi}\sigma} exp\left\{-\frac{(x_0 + l_0 - x_b - \alpha)^2}{2\sigma^2}\right\}g\tau^2$$

$$l_n = v_0\tau - \frac{1}{2}\frac{1}{\sqrt{2\pi}\sigma} exp\left\{-\frac{(x_0 + \sum_0^{n-1} l_i - x_b - \alpha)^2}{2\sigma^2}\right\}g\tau^2$$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012124759 A
- JP 2006189637 A

- WO 9939328 A
- WO 2016035283 A

**Non-patent literature cited in the description**

- **ANONYMOUS.** Wraparound. *Digital Cow software,* 18 April 2015, http://web.ar-chive.org/web/20150418055857/https: //www.digi-cowsottware.corn/detail?